# EUROPEAN PATENT SPECIFICATION

(11) **EP 4 411 494 B1**
(45) Date of publication and mention of the grant of the patent: **19.11.2025**
(21) Application number: 23215402.1
(22) Date of filing: 11.12.2023
(51) Int. Cl.: G05B 19/042

(54) **CONTROL PROGRAM GENERATION APPARATUS, CONTROL PROGRAM GENERATION METHOD, AND PROGRAM**
VORRICHTUNG ZUR ERZEUGUNG EINES STEUERPROGRAMMS, VERFAHREN ZUR ERZEUGUNG EINES STEUERPROGRAMMS UND PROGRAMM
APPAREIL DE GÉNÉRATION DE PROGRAMME DE COMMANDE, PROCÉDÉ DE GÉNÉRATION DE PROGRAMME DE COMMANDE ET PROGRAMME

(30) Priority: 03.02.2023 JP 2023015609; 17.10.2023 JP 2023179201
(43) Date of publication of application: 07.08.2024
(73) Proprietor: Opton Co., Ltd., Seto-shi, Aichi 489-8645 (JP)
(72) Inventor: LU, Haining, Aichi, 4898645 (JP); KANI, Toshihiro, Aichi, 4898645 (JP); OZAKI, Hidenori, Aichi, 4898645 (JP)
(74) Representative: Hasegawa, Kan

(56) References cited:
- US-A1- 2021 182 101
- US-A1- 2022 350 310

## Description

### BACKGROUND OF INVENTION

### Field of the Invention

The present invention relates to a technique for automatically generating a control program for an automated manufacturing machine including multiple actuators.

### Background Art

Techniques have been developed for automatically generating a control program for an automated manufacturing machine by creating a special action chart (hereafter, a YOGO chart) describing the actions of multiple actuators included in the automated manufacturing machine and by causing a computer to read the chart (JP 6829505 B1, US 2022/350310 A1). The YOGO chart is a tabular chart with a vertical axis and a horizontal axis each divided into multiple segments. One of the vertical axis or the horizontal axis is assigned with the actuators included in the automated manufacturing machine. The other axis on the YOGO chart shows the operation period from the start to the end of the operation of the automated machine. The operation period is divided into multiple subperiods. The cells on the tabular YOGO chart each correspond to the combination of one of the actuators and one of the subperiods. Each cell on the YOGO chart includes information about the action of an actuator to specify the actuator to perform the action and the subperiod in which the action is performed.

Each cell on the YOGO chart includes the element action of an actuator. The element action of an actuator refers to a basic motion of an actuator, such as moving forward or backward by a predetermined distance or rotating by a predetermined angle. Any complex operation of the automated manufacturing machine can be separated into the element actions of the individual actuators. Such element actions written in the cells on the YOGO chart describe the operation of the automated manufacturing machine. The information pieces assigned to the subperiods on the YOGO chart are read in order from the first subperiod to cause the actuators to perform the element actions sequentially. This allows the automated manufacturing machine to perform an intended operation. In this manner, the control program can be automatically generated from the YOGO chart to cause the automated manufacturing machine to operate.

US 2021/182101 A1 discloses a program generating device comprising circuitry configured to: display a schedule screen, in which, for each of a plurality of processes executed in a system including a plurality of industrial devices, at least a name of a process is associated with a variable that is at least either referenced or changed in a process program representing an operation of one or more of the plurality of industrial devices and executed in the process, a plurality of names of the plurality of processes obtained from a process database that is stored as process information are included, and an execution order of the plurality of processes can be specified; receive a specification of the execution order on the schedule screen; and generate a system program based on the execution order and the variable of each process included in the execution order.

### SUMMARY OF INVENTION

The automated manufacturing machine with the technique developed above tends to take a long time from the start to the end of the operation, as described in detail below. The control program automatically generated from the YOGO chart is designed to cause the multiple actuators to act in the order of subperiods. When multiple actuators act in one subperiod and one of the actuators takes a long time to complete its action, the machine cannot start actions in the subsequent subperiod until the action that takes the long time is complete. The other actuators that have completed their actions are to wait for the last actuator to complete its action. Such a wait time is particularly long when an actuator takes a much longer time to complete its action than the other actuators that act in the same subperiod. With the long wait time, the automated manufacturing machine may take a long time from the start to the end of the operation.

In response to the above issue with the technique, one or more aspects of the present invention are directed to a technique for automatically generating a control program that allows a shorter time from a start to an end of an operation of an automated manufacturing machine.

In response to the above issue, a control program generation apparatus according to one or more aspects of the present invention is an apparatus described below. The apparatus is specifically a control program generation apparatus (110) for generating a control program (400) for an automated manufacturing machine (10) including a plurality of actuators. The apparatus (110) includes an element action storage (112), an action chart reader (111), and a control program generator (113, 114). The element action storage (112) stores a plurality of element actions in a manner associated with a plurality of program elements to perform the plurality of element actions. Each of the plurality of element actions indicates an action of a corresponding actuator of the plurality of actuators in a direction of a degree of freedom of the corresponding actuator by a specified displacement. The action chart reader (111) reads an action chart (200) describing an operation of the automated manufacturing machine. The action chart (200) includes a plurality of subperiods into which an operation period from a start to an end of the operation of the automated manufacturing machine is divided. The action chart (200) includes the plurality of element actions included in the operation of the automated manufacturing machine. Each of the plurality of element actions is assigned to a corresponding subperiod of the plurality of subperiods. The control program generator (113, 114) generates the control program to cause the automated manufacturing machine to operate by combining together, in an order of the plurality of subperiods on the action chart, the plurality of program elements for the plurality of element actions assigned to the plurality of subperiods on the action chart. The action chart to be read by the action chart reader includes a parallel processing portion (210) including a set of two or more consecutive subperiods of the plurality of subperiods. The parallel processing portion includes a plurality of parallel subperiods (212) into which the parallel processing portion is divided. The plurality of parallel subperiods (212) are parallel to the two or more consecutive subperiods. Each of the plurality of parallel subperiods in the parallel processing portion is assigned with an element action of the plurality of element actions corresponding to a selected actuator of the plurality of actuators. Each of the two or more consecutive subperiods in the parallel processing portion is assigned with an element action of the plurality of element actions corresponding to an actuator of the plurality of actuators other than the selected actuator. The control program generator generates the control program by combining together, in an order of the plurality of parallel subperiods, program elements of the plurality of program elements for element actions of the plurality of element actions assigned to the plurality of parallel subperiods in the parallel processing portion, and combining together, in an order of the two or more consecutive subperiods, program elements of the plurality of program elements for element actions of the plurality of element actions assigned to the two or more consecutive subperiods in the parallel processing portion.

A control program generation method according to one or more aspects of the present invention corresponding to the above control program generation apparatus is a method described below. The method is specifically a control program generation method for generating, with a computer, a control program (400) for an automated manufacturing machine (10) including a plurality of actuators. The method includes reading (STEP 1) an action chart (200) and generating (STEP 4 to STEP 6) the control program. The action chart (200) describes an operation of the automated manufacturing machine. The action chart (200) includes a plurality of subperiods into which an operation period from a start to an end of the operation of the automated manufacturing machine is divided. The action chart (200) includes a plurality of element actions included in the operation of the automated manufacturing machine. Each of the plurality of element actions indicates an action of a corresponding actuator of the plurality of actuators in a direction of a degree of freedom of the corresponding actuator by a specified displacement. Each of the plurality of element actions is assigned to a corresponding subperiod of the plurality of subperiods. The generating (STEP 4 to STEP 6) the control program includes generating (STEP 4 to STEP 6) the control program to cause the automated manufacturing machine to operate by referring to a stored correspondence between the plurality of element actions on the action chart and a plurality of program elements to perform the plurality of element actions, by converting the plurality of element actions on the action chart to the plurality of program elements, and by combining together the plurality of program elements in an order of the plurality of subperiods. The action chart to be read includes a parallel processing portion (210) including a set of two or more consecutive subperiods of the plurality of subperiods. The parallel processing portion includes a plurality of parallel subperiods (212) into which the parallel processing portion is divided. The plurality of parallel subperiods (212) are parallel to the two or more consecutive subperiods. Each of the plurality of parallel subperiods in the parallel processing portion is assigned with an element action of the plurality of element actions corresponding to a selected actuator of the plurality of actuators. Each of the two or more consecutive subperiods in the parallel processing portion is assigned with an element action of the plurality of element actions corresponding to an actuator of the plurality of actuators other than the selected actuator. The generating the control program includes generating the control program by combining together, in an order of the plurality of parallel subperiods, program elements of the plurality of program elements for element actions of the plurality of element actions assigned to the plurality of parallel subperiods in the parallel processing portion, and combining together, in an order of the two or more consecutive subperiods, program elements of the plurality of program elements for element actions of the plurality of element actions assigned to the two or more consecutive subperiods in the parallel processing portion.

The control program generation apparatus and the control program generation method according to the above aspects of the present invention use the action chart describing the operation of the automated manufacturing machine with the plurality of subperiods each assigned with the element action of the corresponding actuator. The program elements corresponding to the element actions are combined together in the order of the subperiods on the action chart to generate the control program. In the control program generated in this manner, the program elements for the element actions assigned to the subperiods are executed in order from the first subperiod, thus causing the automated manufacturing machine to operate. The action chart includes the parallel processing portion including subperiods and parallel subperiods that are parallel to the subperiods. Each parallel subperiod in the parallel processing portion is assigned with the element action of a selected actuator of the plurality of actuators. Each subperiod in the parallel processing portion other than the parallel subperiod is assigned with the element action of an actuator other than the selected actuator. In the parallel processing portion on the action chart, the program elements for the element actions assigned to the parallel subperiods are combined together in the order of the parallel subperiods, and the program elements for the element actions assigned to the subperiods are combined together in the order of the subperiods. The control program is thus generated.

In the control program generated from the action chart, the program elements corresponding to the element actions assigned to the subperiods are executed in order from the first subperiod. When multiple element actions are assigned to one subperiod, the machine cannot start element actions in the subsequent subperiod until the element action that takes the longest time is complete. This causes actuators with a shorter element action time to have a wait time. Such a wait time is longer when the multiple element actions assigned to the same subperiod vary more widely in their action time. With the longer wait time, the automated manufacturing machine takes a longer time to complete the operation. In response to this, the action chart includes the parallel processing portion including subperiods and parallel subperiods that are parallel to the subperiods. The subperiods and the parallel subperiods in the parallel processing portion are assigned with element actions. For a parallel subperiod, the subsequent parallel subperiod can start before the element actions in a current subperiod are complete. For a subperiod, the subsequent subperiod can start before the element actions in a current parallel subperiod are complete. This avoids a long wait time when element actions with a shorter action time and element actions with a longer action time are performed in parallel. Thus, the control program is automatically generated to allow a shorter time from the start to the end of the operation of the automated manufacturing machine.

The control program generation apparatus according to the above aspect of the present invention may read the local chart that is separate from the action chart describing the operation of the automated manufacturing machine. The local chart is a small action chart including the parallel subperiods in the parallel processing portion extracted from the action chart. The local chart includes the element action of at least one selected actuator assigned to each parallel subperiod in the parallel processing portion. And the action chart describing the operation of the automated manufacturing machine includes a local chart identifier that is specific to the local chart and assigned to the parallel processing portion, instead of including the element action of at least one selected actuator assigned to each parallel subperiod in the parallel processing portion.

The local chart identifier assigned to the parallel processing portion on the action identifies the local chart, which then identifies the element action of the selected actuator assigned to each parallel subperiod in the parallel processing portion on the action chart. The local chart is used to assign the element action of the selected actuator to each parallel subperiod in the parallel processing portion on the action chart. The action chart thus does not directly include the element action assigned to each parallel subperiod. This facilitates creation of the action chart or understanding of the action chart.

The above control program generation method according to one or more aspects of the present invention may also be implemented as a program for causing a computer to perform the control program generation method. The program according to one or more aspects of the present invention is specifically a program for causing a computer to implement a method for generating a control program (400) for an automated manufacturing machine (10) including a plurality of actuators. The method includes reading (STEP 1) an action chart (200) and generating (STEP 4 to STEP 6) the control program. The action chart (200) describes an operation of the automated manufacturing machine. The action chart (200) includes a plurality of subperiods into which an operation period from a start to an end of the operation of the automated manufacturing machine is divided. The action chart (200) includes a plurality of element actions included in the operation of the automated manufacturing machine. Each of the plurality of element actions indicates an action of a corresponding actuator of the plurality of actuators in a direction of a degree of freedom of the corresponding actuator by a specified displacement. Each of the plurality of element actions is assigned to a corresponding subperiod of the plurality of subperiods. The generating (STEP 4 to STEP 6) the control program includes generating (STEP 4 to STEP 6) the control program to cause the automated manufacturing machine to operate by referring to a stored correspondence between the plurality of element actions on the action chart and a plurality of program elements to perform the plurality of element actions, by converting the plurality of element actions on the action chart to the plurality of program elements, and by combining together the plurality of program elements in an order of the plurality of subperiods. The action chart to be read includes a parallel processing portion (210) including a set of two or more consecutive subperiods of the plurality of subperiods. The parallel processing portion includes a plurality of parallel subperiods (212) into which the parallel processing portion is divided. The plurality of parallel subperiods (212) are parallel to the two or more consecutive subperiods. Each of the plurality of parallel subperiods in the parallel processing portion is assigned with an element action of the plurality of element actions corresponding to a selected actuator of the plurality of actuators. Each of the two or more consecutive subperiods in the parallel processing portion is assigned with an element action of the plurality of element actions corresponding to an actuator of the plurality of actuators other than the selected actuator. The generating the control program includes generating the control program by combining together, in an order of the plurality of parallel subperiods, program elements of the plurality of program elements for element actions of the plurality of element actions assigned to the plurality of parallel subperiods in the parallel processing portion, and combining together, in an order of the two or more consecutive subperiods, program elements of the plurality of program elements for element actions of the plurality of element actions assigned to the two or more consecutive subperiods in the parallel processing portion.

The program can be loaded and executed by the computer to automatically generate the control program that allows a shorter time from a start to an end of an operation of the automated manufacturing machine.

### BRIEF DESCRIPTION OF THE DRAWINGS

FIG. 1 is a schematic view of a pipe bender 10 controllable with a control apparatus 100 according to an embodiment.
FIG. 2 is a conceptual block diagram of the control apparatus 100 for controlling the actions of actuators Ac10 to Ac18 included in the pipe bender 10.
FIGs. 3A and 3B are each a diagram showing the basic principle of automatically generating a control program from a YOGO chart.
FIG. 4 is a table including multiple element actions used for the YOGO chart in FIGs. 3A and 3B.
FIG. 5 is a table including classified multiple element actions usable for the YOGO chart.
FIG. 6 is an example YOGO chart 200 shown partially.
FIGs. 7A to 7E are each an example table including parameter values defined for parameter identifiers 206b written on the YOGO chart 200.
FIGs. 8A and 8B are each a diagram describing the automated manufacturing machine that tends to take a long time from the start to the end of the operation using the control program automatically generated from the YOGO chart 200.
FIG. 9 is an example YOGO chart 200 in the present embodiment including a parallel processing portion 210.
FIG. 10 is a conceptual diagram of the YOGO chart 200 including the parallel processing portion 210.
FIG. 11 is a diagram corresponding to the YOGO chart 200 including the parallel processing portion 210 but rewritten to change the lengths of action lines 203 to represent the action time lengths of the actuators.
FIGs. 12A and 12B are each an example YOGO chart 200 in another embodiment including the parallel processing portion 210.
FIG. 13 is an example YOGO chart 200 in another embodiment including the parallel processing portion 210.
FIG. 14 is a diagram of a control program generation apparatus 110 included in the control apparatus 100.
FIG. 15 is a flowchart of a control program generation process for generating the control program from the YOGO chart 200 performed by the control program generation apparatus 110.
FIG. 16 is an example YOGO chart 200 to be read in the control program generation process.
FIG. 17 is a main chart 200M separated from the YOGO chart 200.
FIG. 18 is a local chart 200L extracted from the portion enclosed by the dot-dash line in FIG. 17.
FIG. 19 is a local chart 200L extracted from the portion enclosed by the two-dot-dash line in FIG. 17.
FIG. 20 is a flowchart of an intermediate data generation process performed in the control program generation process.
FIG. 21 is a diagram of example intermediate data 300M generated from the main chart 200M.
FIG. 22 is a diagram of example intermediate data 300M to which the start positions and the end positions of the local charts 200L are added.
FIGs. 23A and 23B are each a diagram of example intermediate data 300L about the local chart 200L generated through the intermediate data generation process.
FIG. 24 is a diagram of an example main program 400M resulting from conversion of the intermediate data 300M about the main chart 200M.
FIGs. 25A and 25B are each a diagram of an example local program 400L resulting from conversion of the intermediate data 300L about the local chart 200L.
FIG. 26 is a flowchart of the first half of an operation control process performed by an operation control apparatus 120 using the control programs.
FIG. 27 is a flowchart of the second half of the operation control process.
FIG. 28 is a flowchart of the first half of a local program execution process activated in the operation control process.
FIG. 29 is a flowchart of the second half of the local program execution process.
FIG. 30 is an example YOGO chart 200 in a first modification including local chart identifiers 220.
FIG. 31 is an example local chart 200L corresponding to the local chart identifiers 220 (lclchrt1).
FIG. 32 is an example local chart 200L corresponding to the local chart identifiers 220 (lclchrt2).
FIG. 33 is an example YOGO chart 200 in a second modification including, in one parallel processing portion 210, multiple types of local chart identifiers 220 each corresponding to a different number of parallel subperiods 212.
FIG. 34 is an example global chart 200G.
FIG. 35 is an example YOGO chart 200 in the second modification including the local chart identifiers 220 and global chart identifiers 230.
FIG. 36 is another example YOGO chart 200 in the second modification.

### DETAILED DESCRIPTION

### A. Apparatus Structure

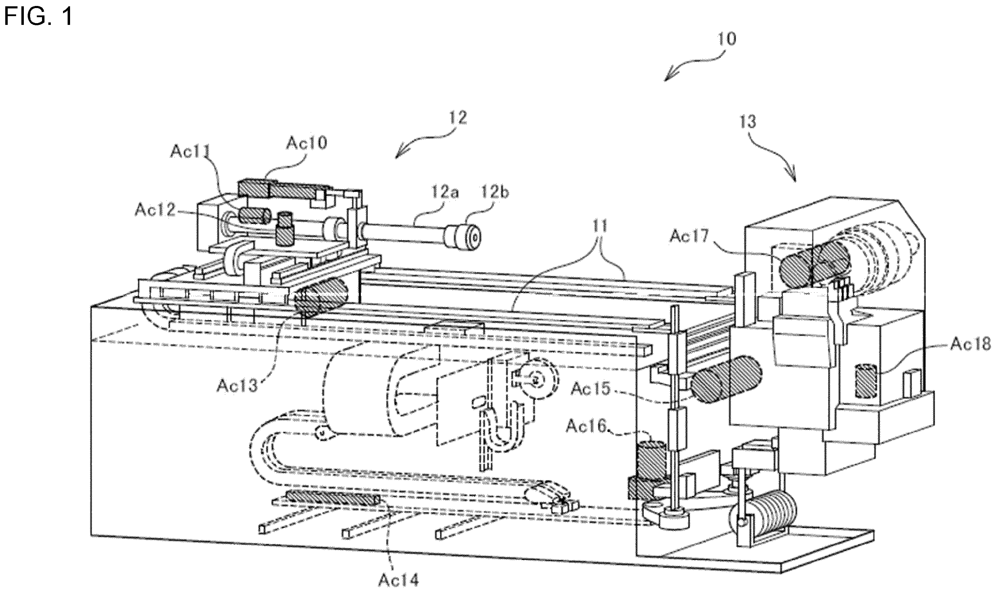

FIG. 1 is a schematic external view of an example pipe bender 10. The pipe bender 10 is an automated manufacturing machine for automatically bending a long pipe into an intended shape. The automated manufacturing machine is not limited to the pipe bender 10 described below and may be any machine that includes multiple actuators and automatically performs multiple operations such as holding, conveying, machining, and heating objects. The automated manufacturing machine may be, for example, a multijoint robotic arm, or may be a manufacturing system combining a multijoint robotic arm and a conveyor.

The pipe bender 10 illustrated in FIG. 1 is externally in the shape of a substantially horizontal rectangular prism. The pipe bender 10 includes two rails 11 extending lengthwise over the upper surface of the rectangular prism. The pipe bender 10 includes a conveyor unit 12 for holding and conveying a pipe to be machined (not shown) at one end (left in FIG. 1) of the rails 11. The pipe bender 10 includes a machining unit 13 at the end opposite to the conveyor unit 12. The machining unit 13 is used for bending a pipe (not shown). The conveyor unit 12 includes a protruding cylindrical holder shaft 12a with a chuck 12b attached to its distal end for holding a pipe (not shown). The conveyor unit 12 is moved on the rails 11 with the chuck 12b holding the pipe to supply the pipe to the machining unit 13, which can then bend the pipe.

The pipe bender 10 in the present embodiment can control the movement distance of the conveyor unit 12 and thus the conveying distance of the pipe. The position on the pipe to be bent can thus be changed as appropriate. The holder shaft 12a with the chuck 12b can be turned (twisted) about its axis to bend the pipe in an intended direction. To achieve these operations, the pipe bender 10 includes actuators Ac10, Ac11, Ac12, and Ac13 inside the conveyor unit 12. The actuator Ac10 is for opening or closing the chuck 12b. The actuator Ac11 is for rotating the holder shaft 12a about the axis. The actuator Ac12 is for translating the holder shaft 12a horizontally relative to the axial direction. The actuator Ac13 is for moving the conveyor unit 12 forward or backward on the rails 11. In the pipe bender 10 in the present embodiment, the actuators Ac10 to Ac13 are all alternating current (AC) servomotors operable on AC power. However, the pipe bender 10 may include actuators with other driving schemes (e.g., hydraulic cylinders, solenoids, or pulse motors) as appropriate for the intended performance of the actuators. The conveyor unit 12 also includes sensors such as encoders and limit switches for detecting the rotational position of the holder shaft 12a and the movement position of the conveyor unit 12. Such sensors are not shown in FIG. 1 to avoid complexity in the figure.

The pipe bender 10 includes multiple actuators Ac15, Ac16, Ac17, and Ac18 for bending the pipe inside the machining unit 13. The pipe bender 10 also includes an actuator Ac14 in a space below the two rails 11. The actions of the actuators Ac14 to Ac18 will be described in detail later. The pipe bender 10 also includes switches and sensors such as contact switches and encoders inside the machining unit 13 or in the space below the two rails 11. The switches and sensors are not shown to avoid complexity in the figure.

The pipe bender 10 also includes, inside the machining unit 13, multiple driver amplifiers (not shown) for driving the above actuators Ac10 to Ac18. The driver amplifiers are electrical components with the functions below. To cause the actuators Ac10 to Ac18 to perform intended actions, drive currents with appropriate waveforms and voltages are to be supplied to the actuators Ac10 to Ac18. The drive currents to be supplied to the actuators Ac10 to Ac18 differ depending on their driving schemes. Actuators with the same driving scheme may have drive currents with different waveforms and voltages. The respective actuators Ac10 to Ac18 thus have specifically designed electrical components, or driver amplifiers. The driver amplifiers output appropriate drive currents to the actuators Ac10 to Ac18 for driving these actuators at levels specified by the control apparatus 100 for controlling the pipe bender 10.

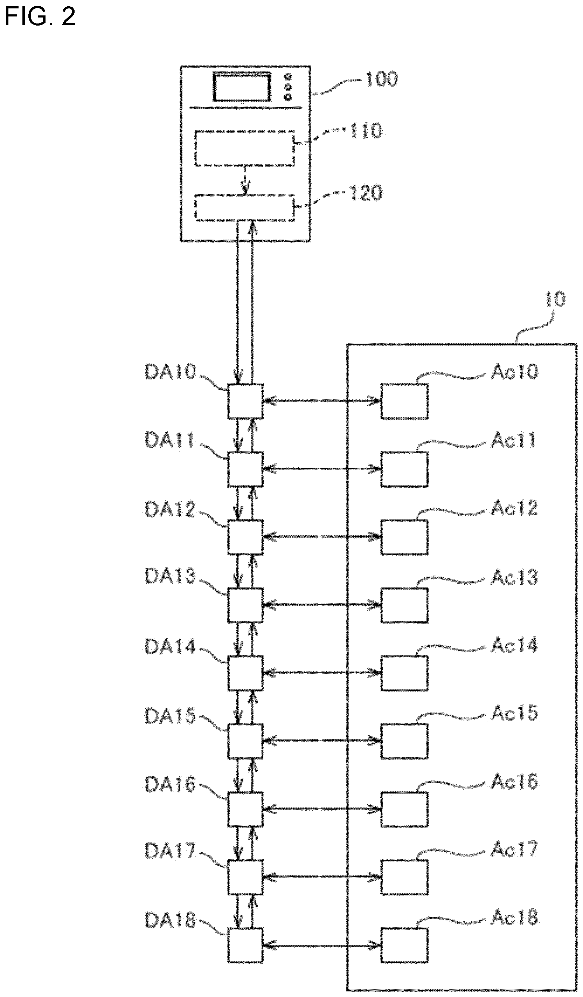

FIG. 2 is a diagram showing the actuators Ac10 to Ac18 included in the pipe bender 10 connected to the control apparatus 100 with driver amplifiers DA10 to DA18. The actuator Ac10 is connected to and driven by the driver amplifier DA10. The actuator Ac11 is connected to and driven by the driver amplifier DA11. The actuators Ac12 to Ac18 are connected to and driven by the driver amplifiers DA12 to DA18. The driver amplifiers DA10 to DA18 are connected in series with one another. The driver amplifier at one end (the driver amplifier DA10 in the illustrated example) is connected to the control apparatus 100. However, the components may be connected in any other manner. For example, the driver amplifiers DA10 to DA18 may each be directly connected to the control apparatus 100.

To bend the pipe, the pipe bender 10 is to control the actuators Ac10 to Ac18 to act at appropriate timings and by appropriate displacements. This involves a control program executable on the control apparatus 100 to specify appropriate timings and driving levels for the driver amplifiers DA10 to DA18. Creating the control program takes more effort than creating the hardware such as the pipe bender 10.

The inventors of the present application have developed a technique for automatically generating the control program, which has been patented. The patented technique uses a special action chart, referred to as a YOGO chart, for the automated manufacturing machine (the pipe bender 10 in this example) including multiple actuators (the actuators Ac10 to Ac18 in this example). The YOGO chart describes the operation of the automated manufacturing machine using the element actions of the actuators into which the operation of the automated manufacturing machine is separated. The YOGO chart can be used to automatically generate the control program. The principle of automatically generating the control program from the YOGO chart will be described.

### B. Principle of Automatically Generating Control Program from YOGO Chart

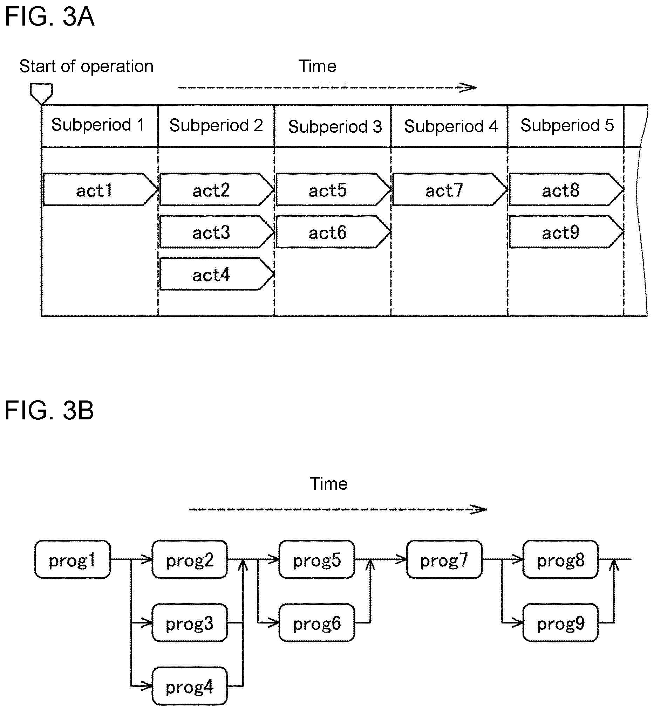

FIGs. 3A and 3B are each a diagram showing the principle of automatically generating the control program for the automated manufacturing machine (the pipe bender 10 in this example) using the special action chart referred to as the YOGO chart. FIG. 3A is a primitive YOGO chart before undergoing various improvements. The YOGO chart in the present embodiment (described later) is an improvement on the primitive YOGO chart in FIG. 3A. However, the YOGO chart in the present embodiment uses the same principle as the primitive YOGO chart for automatically generating the control program. For easy understanding, the primitive YOGO chart in FIG. 3A is used to show the principle of automatically generating the control program from the YOGO chart.

As described above, the YOGO chart describes the operation of the automated manufacturing machine by combining element actions of the multiple actuators included in the automated manufacturing machine. The element action of each actuator refers to a simple action of the actuator in the direction of the degree of freedom by a specified displacement. For a rotary actuator such as a motor, for example, the element action is a rotation motion by a specified angle. For an actuator that moves forward or backward such as a cylinder, the element action is a forward or backward motion by a specified distance. For an actuator that rotates a ball screw with a motor to move a member engaged with the ball screw forward or backward, the element action is either a rotation motion of the motor by a specified angle or a motion of the member by a specified distance. Such a simple action of each actuator in the direction of the degree of freedom by a specified displacement is referred to as an element action.

The YOGO chart includes multiple subperiods into which the operation period from the start to the end of the operation of the automated manufacturing machine is divided. The element action of each actuator is assigned to a selected one of the subperiods. In the example in FIG. 3A, the first subperiod (subperiod 1) at the start of the operation of the automated manufacturing machine is assigned with an element action act1 of an actuator. The subsequent subperiod (subperiod 2) is assigned with an element action act2, an element action act3, and an element action act4 (of one or more actuators that are the same as or different from the actuator for the subperiod 1). The subsequent subperiod (subperiod 3) is assigned with an element action act5 and an element action act6. The subsequent subperiod (subperiod 4) is assigned with an element action act7. The subsequent subperiod (subperiod 5) is assigned with an element action act8 and an element action act9.

In this manner, a series of actions to be performed by the multiple actuators can be described. More specifically, the element action act1 of an actuator starts first. Upon completion of the element action act1, the element actions act2, act3, and act4 of the corresponding actuators start. Upon completion of these element actions, the element actions act5 and act6 start. Upon completion of these element actions, the element action act7 starts. Upon completion of the element action act7, the element actions act8 and act9 start. The series of actions is thus described. In this manner, the operation of the automated manufacturing machine is separated into element actions of the multiple actuators included in the automated manufacturing machine, and the element actions are assigned to any of the subperiods on the YOGO chart, thus describing the operation of the automated manufacturing machine.

As described above, each subperiod is the period for which the assigned actuator acts, rather than representing the length of the period. For example, the subperiod 1 has a length of time taken for the element action act1. The subperiod 2 has a length of time being the longest of the lengths of time taken for the element actions act2, act3, and act4. The subperiods thus typically have different lengths of time.

As described above, the element actions of the actuators are simple actions, such as rotating a motor by a predetermined angle or moving a cylinder forward or backward by a predetermined distance. The element actions of the actuators can thus be performed with programs (program elements) that can be pre-created. For example, a program element prog1 can be pre-created to cause an actuator to perform the element action act1. Program elements prog2 to prog9 can also be pre-created to perform the respective element actions act2 to act9.

These program elements can be combined together as defined by the primitive YOGO chart in FIG. 3A to automatically generate the control program to cause the automated manufacturing machine to operate. More specifically, as shown in FIG. 3B, the program element prog1 is first activated. Upon completion of the program element prog1, the program elements prog2 to prog4 are activated. Upon completion of the program elements prog2 to prog4, the program elements prog5 and prog6 are activated. Upon completion of the program elements prog5 and prog6, the program element prog7 is activated. Upon completion of the program element prog7, the program elements prog8 and prog9 are activated. In this manner, the program elements are pre-created to cause the actuators to perform their element actions and combined together to be activated sequentially in an order defined by the YOGO chart. Thus, the control program can be automatically generated from the YOGO chart to cause the automated manufacturing machine to operate.

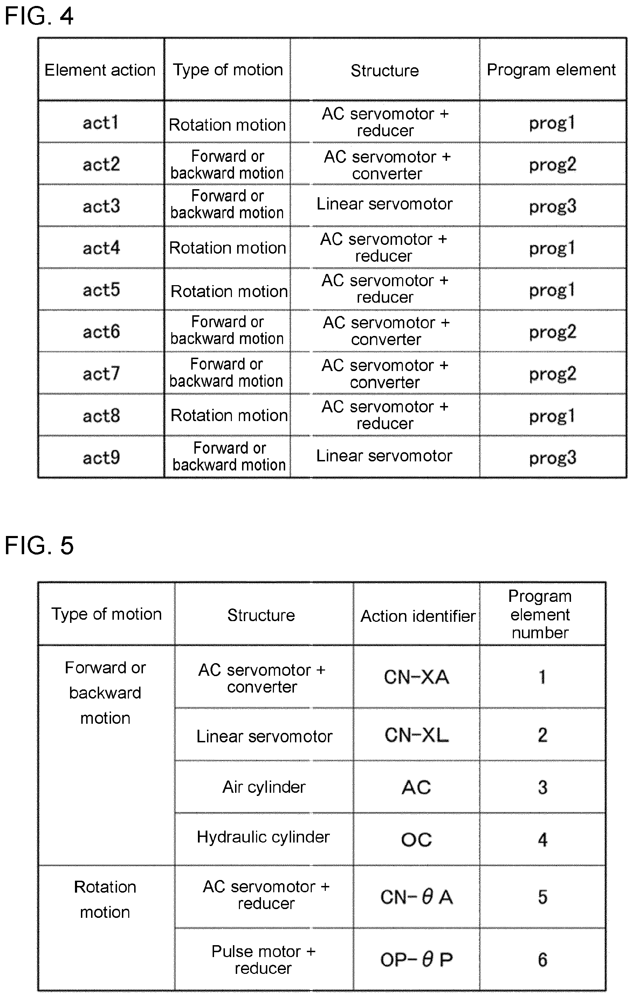

The above process involves pre-creating all the program elements (the program elements prog1 to prog9 in this example) for performing the element actions. However, this is not difficult, as described below. FIG. 4 is a table including types of motions (such as a rotation motion and a forward or backward motion) and structures (schematic structures of actuators) for the element actions act1 to act9 shown in FIG. 3A. For example, the element action act1 is a rotation motion to be performed by an actuator that combines an AC servomotor and a reducer. More specifically, the AC servomotor rotates its shaft, and the reducer reduces the speed of rotation of the shaft. The element action act2 is a forward or backward motion to be performed by an actuator that combines an AC servomotor and a converter. More specifically, the AC servomotor rotates its shaft, and the converter converts the rotation of the shaft to a linear motion. The element action act3 is a forward or backward motion to be performed by an actuator including a linear servomotor.

Each of the element actions act4, act5, and act8 is a rotation motion to be performed by an actuator that combines an AC servomotor and a reducer, similarly to the element action act1. Each of the element actions act6 and act7 is a forward or backward motion to be performed by an actuator that combines an AC servomotor and a converter, similarly to the element action act2. The element action act9 is a forward or backward motion to be performed by an actuator including a linear servomotor, similarly to the element action act3.

The structures for performing the element actions act1, act4, act5, and act8 all combine an AC servomotor and a reducer, and may differ simply in the output from the AC servomotor or the reduction ratio of the reducer. Thus, these element actions can be performed using a common program element. The structures for performing the element actions act2, act6, and act7 all combine an AC servomotor and a converter. Thus, these element actions can be performed using a common program element. Similarly, the element actions act3 and act9 can be performed using a common program element. Thus, the nine element actions act1 to act9 can be performed simply by preparing the three program elements prog1 to prog3, selecting any of the program elements prog1 to prog3 appropriate for the element actions, and specifying appropriate displacements (such as rotation angles or movement distances). A common program element is usable for multiple element actions also in examples other than the example in FIGs. 3A and 3B.

FIG. 5 is a table including classified typical element actions usable for the YOGO chart. As shown in FIG. 5, the types of element actions can be classified into a forward or backward motion and a rotation motion, except for special motions. The structure for performing the forward or backward motion is basically any of the structure combining an AC servomotor and a converter, the structure including a linear servomotor, the structure including an air cylinder, or the structure including a hydraulic cylinder. Similarly, the structure for performing the rotation motion is basically either the structure combining an AC servomotor and a reducer or the structure combining a pulse motor and a reducer. All the element actions are thus classified into six types, including four forward or backward motions and two rotation motions. Element actions of the same type can be performed using the same program element. Thus, six program elements can cover substantially all the element actions.

The YOGO chart described below includes action identifiers for identifying the types of element actions. For example, an action identifier CNC-XA on the YOGO chart indicates a forward or backward motion to be performed by an actuator combining an AC servomotor and a converter. An action identifier CNC-XL indicates a forward or backward motion to be performed by an actuator including a linear servomotor. An action identifier AC indicates a forward or backward motion to be performed by an air cylinder. An action identifier OC indicates a forward or backward motion to be performed by a hydraulic cylinder. An action identifier CNC-θA indicates a rotation motion to be performed by an actuator combining an AC servomotor and a reducer. An action identifier OPN-θP indicates a rotation motion to be performed by an actuator combining a pulse motor and a reducer. The program element for performing the element action with each action identifier is assigned with a specific program element number. The program element number identifies the program element.

### C. Describing YOGO Chart

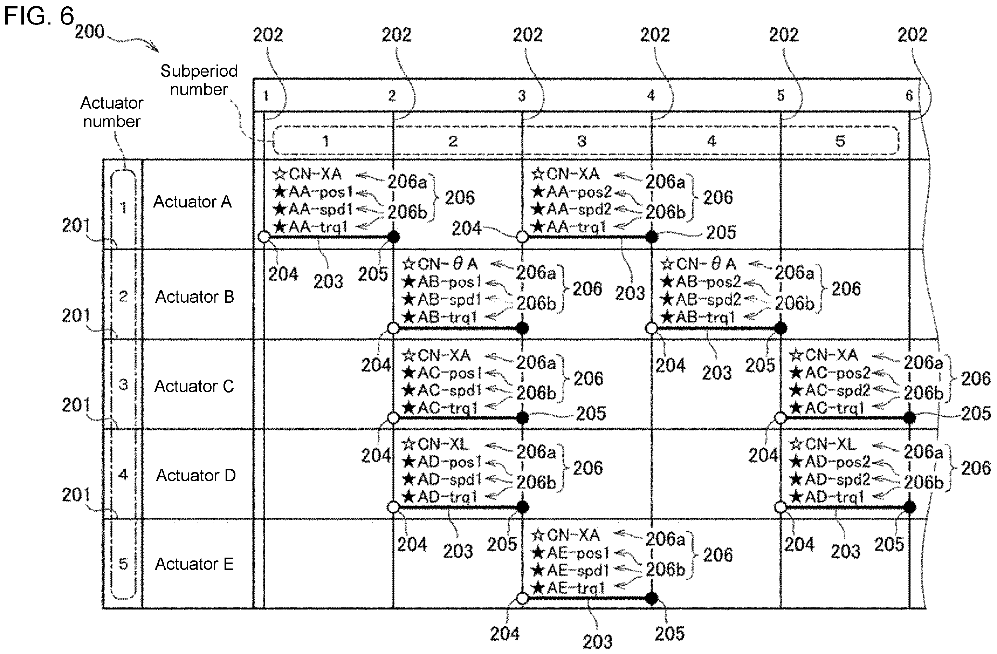

FIG. 6 is the YOGO chart 200 showing description of the operation of the automated manufacturing machine. In the illustrated example, the automated manufacturing machine includes five actuators A to E. As shown in FIG. 6, the YOGO chart 200 is a large table with multiple horizontal lines and multiple vertical lines intersecting with each other. The horizontal lines of the multiple intersecting lines are referred to as separation lines 201, and the vertical lines are referred to as trigger lines 202.

The trigger lines 202 are given serial numbers starting with number 1. In the example in FIG. 6, the trigger lines 202 have their serial numbers written in the top field of the YOGO chart 200. Each area between adjacent trigger lines 202 corresponds to the subperiod described above with reference to FIGs. 3A and 3B. The subperiods are also given serial numbers (hereafter, subperiod numbers) starting with 1. On the YOGO chart 200 illustrated in FIG. 6, the trigger lines 202 are drawn in the vertical direction, and thus the subperiods between the trigger lines 202 are arranged in the horizontal direction. However, the trigger lines 202 may be drawn in the horizontal direction. In this case, the subperiods are arranged in the vertical direction.

The YOGO chart 200 in the present embodiment is divided into multiple horizontal areas (hereafter, rows) by the multiple separation lines 201. The horizontal rows are given serial numbers (hereafter, actuator numbers) starting with number 1. Each actuator included in the automated manufacturing machine is assigned to any one of the multiple horizontal rows. For the automated manufacturing machine including the five actuators A to E as shown in FIG. 6, for example, the actuator A is assigned to the row with the actuator number 1. The actuator B is assigned to the row with the actuator number 2. The actuator C is assigned to the row with the actuator number 3. The actuator D is assigned to the row with the actuator number 4. The actuator E is assigned to the row with the actuator number 5.

The element action of each of the actuators A to E is written at an appropriate position in its corresponding horizontal row. For example, the element action to be performed by the actuator A in the subperiod 1 is written at the coordinate position of the cell at the intersection of the horizontal row with the actuator number 1 and the vertical area (hereafter, the column) with the subperiod number 1. To write the element action, an action line 203 is drawn at the coordinate position of the cell for the element action on the YOGO chart 200, and an action identifier 206a and parameter identifiers 206b are written above the action line 203.

In the example in FIG. 6, the YOGO chart 200 includes the action line 203 in the cell at the coordinate position with the actuator number 1 and the subperiod number 1 (hereafter, the chart coordinates (1, 1)). The action line 203 has a start point 204 indicated by a white circle and an end point 205 indicated by a black circle. Above the action line 203, the element action 206 is written using the action identifier 206a (CNC-XA) following a white star and using three parameter identifiers 206b each following a black star. The element action 206 with the start point 204 on the number-1 trigger line 202 and with the end point 205 on the number-2 trigger line 202 indicates that the element action 206 starts at the time indicated by the number-1 trigger line 202 and ends at the time indicated by the number-2 trigger line 202. As described above with reference to FIG. 5, the action identifier 206a (CNC-XA) above the action line 203 indicates a forward or backward motion to be performed by an actuator combining an AC servomotor and a converter. In other words, the action identifier 206a (CNC-XA) written at the coordinate position with the actuator number 1 indicates that the actuator A corresponding to the actuator number 1 combines the AC servomotor and the converter to perform the forward or backward motion. The parameter identifiers 206b written below the action identifier 206a indicate the details of the forward or backward motion (specifically, the movement distance, the movement speed, and the movement torque for the forward or backward motion). The parameter identifiers 206b will be described in detail later.

The cell at the coordinate position with the actuator number 2 and the subperiod number 2 (the chart coordinates (2, 2)) includes the element action 206 having the action identifier 206a (CNC-θA) and three parameter identifiers 206b above the action line 203. The action identifier 206a (CNC-θA) indicates a rotation motion to be performed by an actuator combining an AC servomotor and a reducer. Thus, the actuator B corresponding to the actuator number 2 combines the AC servomotor and the reducer to perform the rotation motion. The three parameter identifiers 206b written below the action identifier 206a indicate the rotation angle, the rotation speed, and the rotation torque. The parameter identifiers 206b have specific numerical values (parameter values) that are predefined for the corresponding actuator.

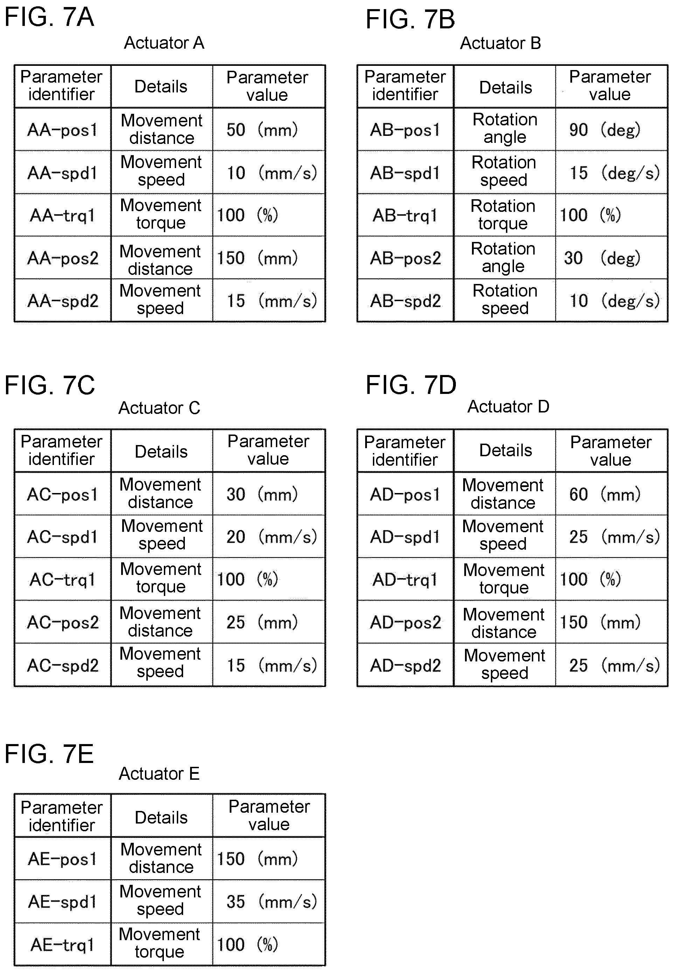

FIGs. 7A to 7E are each a table including parameter values predefined for the parameter identifiers 206b for the corresponding actuator. FIGs. 7A to 7E are tables, referred to as tables B, each including parameter values predefined for the parameter identifiers 206b for the corresponding actuator. For example, the table B in FIG. 7A includes five parameter identifiers 206b for the actuator A. As described above, the actuator A combines the AC servomotor and the converter to perform the forward or backward motion. The actuator A thus has the parameter values of the movement distance, the movement speed, and the movement torque specified by the parameter identifiers 206b. More specifically, the two parameter identifiers 206b (AA-pos1 and AA-pos2) specify the movement distance and have the respective parameter values of 50 and 150 mm. The two parameter identifiers 206b (AA-spd1 and AA-spd2) specify the movement speed and have the respective parameter values of 10 and 15 mm/s. The parameter identifier 206b (AA-trq1) specifies the allowable movement torque for the forward or backward motion using the percentage to the standard torque of the AC servomotor. More specifically, the parameter identifier 206b (AA-trq1) has a parameter value of 100%, indicating that the maximum allowable torque is the standard torque.

The table B in FIG. 7B includes five parameter identifiers 206b for the actuator B. As described above, the actuator B combines the AC servomotor and the reducer to perform the rotation motion. The actuator B thus has the parameter values of the rotation angle, the rotation speed, and the rotation torque specified by the parameter identifiers 206b. More specifically, the two parameter identifiers 206b (AB-pos1 and AB-pos2) specify the rotation angle and have the respective parameter values of 90 and 30°. The two parameter identifiers 206b (AB-spd1 and AB-spd2) specify the rotation speed and have the respective parameter values of 15 and 10°/s. The parameter identifier 206b (AB-trq1) specifies an allowable rotation torque for the rotation motion using the percentage to the standard torque of the AC servomotor. More specifically, the parameter identifier 206b (AB-trq1) has a parameter value of 100%, indicating that the maximum allowable torque is the standard torque.

Similarly, the table B in FIG. 7C includes five parameter identifiers 206b for the actuator C. The table B in FIG. 7D includes five parameter identifiers 206b for the actuator D. The table B in FIG. 7E includes three parameter identifiers 206b for the actuator E. The parameter identifiers 206b defined for each actuator are specific to the actuator. For example, the parameter identifier 206b (AB-spd1) specifies the rotation speed of the actuator B and is unusable for specifying other items of information.

The YOGO chart 200 includes the element actions 206 with the action identifiers 206a and the parameter identifiers 206b described above. For example, the YOGO chart 200 in FIG. 6 includes the element action 206 at the chart coordinates (1, 1) (specifically, at the coordinate position with the actuator number 1 and the subperiod number 1). The element action 206 has the action identifier 206a (CNC-XA) and the parameter identifiers 206b (AA-pos1, AA-spd1, and AA-trq1). This indicates that the element action 206 is a forward or backward motion of an actuator with a movement distance of 50 mm, a movement speed of 10 mm/s, and the maximum allowable torque being the standard torque of the AC servomotor.

As described above, the YOGO chart 200 includes the action identifiers 206a and the parameter identifiers 206b of the element actions 206 written in the cells at the coordinate positions determined by the actuator numbers and the subperiod numbers. The coordinate position at which each element action 206 is written has the actuator number indicating the actuator to perform the element action 206, and has the subperiod number indicating the time to perform the element action 206. Each element action 206 has the action identifier 206a and the parameter identifiers 206b indicating the details of the element action 206. The YOGO chart 200 thus describes the operation of the automated manufacturing machine with the element actions 206 written at the coordinate positions. On the YOGO chart 200 in FIG. 6, for example, the actuator A acts first as specified by its element action 206. Upon completion of the action of the actuator A, the actuators B to D act as specified by their element actions 206. Upon completion of the actions of the actuators B to D, the actuators A and E act as specified by their element actions 206. Upon completion of the actions of the actuators A and E, the actuators C and D act as specified by their element actions 206. The chart can describe such a series of actions.

In the present embodiment, each element action 206 is written on the YOGO chart 200 using the action identifier 206a and the multiple parameter identifiers 206b. However, each element action 206 may be written on the YOGO chart 200 in another manner. For example, the example in FIG. 6 may be modified to use tables each including the multiple parameter identifiers 206b written below the corresponding action identifier 206a associated with their parameter values. Each table may have a specific table identifier. The YOGO chart 200 may include, instead of the multiple parameter identifiers 206b written below each action identifier 206a, the table identifier of the table including parameter values for the parameter identifiers 206b.

As described above, the YOGO chart 200 describing the operation of the automated manufacturing machine can be automatically converted to the control program to cause the automated manufacturing machine to operate. However, the control program generated in this manner tends to cause the automated manufacturing machine to take a long overall operation time from the start to the end, as described below.

### D. Automated Manufacturing Machine to Take Long Overall Operation Time

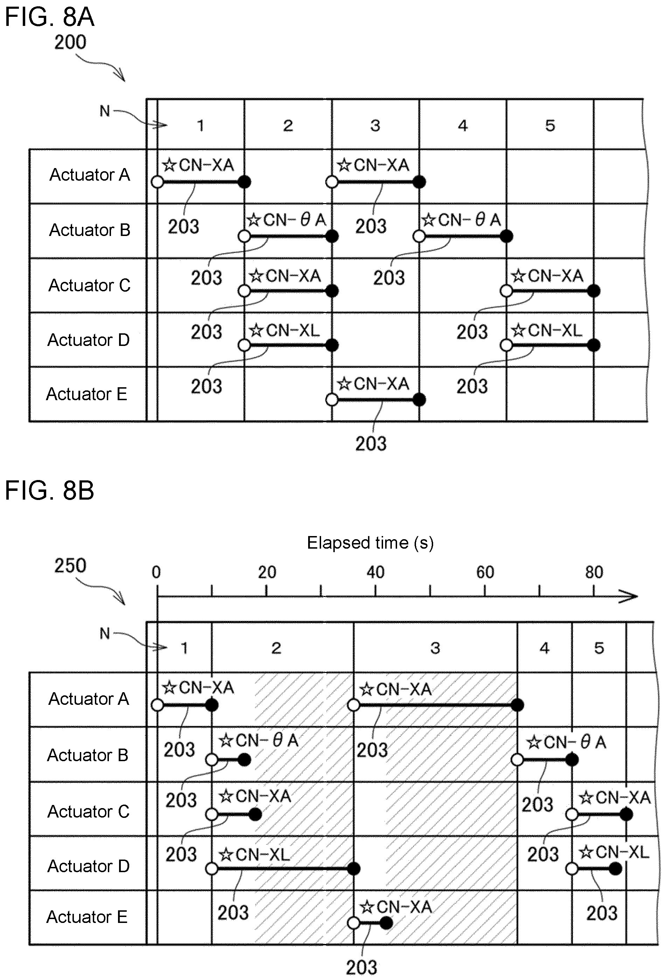

FIGs. 8A and 8B are each a diagram describing the automated manufacturing machine that tends to take a long time from the start to the end of the operation using the control program automatically generated from the YOGO chart 200. FIG. 8A illustrates the YOGO chart 200 describing the operation of the automated manufacturing machine including the five actuators A to E. On the YOGO chart 200 in FIG. 8A, the action identifiers 206a are shown above the action lines 203 without the parameter identifiers 206b to avoid complexity in the figure. The YOGO charts 200 in the figures subsequent to FIGs. 8A and 8B also do not show the parameter identifiers 206b.

On the YOGO chart 200 illustrated in FIG. 8A, the five actuators A to E seem to act regularly in the defined order. For example, the second subperiod (with the subperiod number 2) includes the action lines 203 for the three actuators B to D with the same length, seemingly indicating that the actions of the actuators B to D start simultaneously and end simultaneously. However, the lengths of the action lines 203 on the YOGO chart 200 do not represent the action time lengths of the actuators.

FIG. 8B is a YOGO chart 250 rewritten to change the lengths of the action lines 203 to represent the action time lengths of the actuators. The rewritten YOGO chart 250 shows the elapsed time at the top. As shown in the YOGO chart 250 in FIG. 8B, in the first subperiod (with the subperiod number 1), the actuator A alone acts and its action takes 10 seconds. After 10 seconds from the start of the action, the subperiod with the subperiod number 2 starts, thus starting the actions of the three actuators B to D. In the illustrated example, the action of the actuator B takes 6 seconds, the action of the actuator C takes 8 seconds, and the action of the actuator D takes 26 seconds. When the actions of the actuator B and the actuator C are complete but the action of the actuator D is incomplete, the machine cannot end the current subperiod (or in other words, the actuators B and D wait for the action of the actuator D to be complete). The wait time is 20 (= 26 - 6) seconds for the actuator B and 18 (= 26 - 8) seconds for the actuator C.

When the subperiod with the subperiod number 2 ends, the subperiod with the subperiod number 3 starts, thus starting the actions of the two actuators A and E. In the subperiod with the subperiod number 3 in the illustrated example, the action of the actuator A takes 30 seconds, and the action of the actuator E takes 6 seconds. The actuator E is thus to wait for the action of the actuator A to be complete. The wait time is 24 (= 30 - 6) seconds. When the subperiod with the subperiod number 3 ends, the subperiod with the subperiod number 4 starts, thus starting the action of the actuator B.

With the long wait time, the automated manufacturing machine may take a long time from the start to the end of the operation. Such a long operation time can directly result from an actuator taking a much longer time to complete its action than the other actuators that act in the same subperiod. The long operation time can also indirectly result from the subperiods being arranged serially from the first subperiod to the final subperiod on the YOGO chart 200. With the subperiods arranged serially, actuators that act at the same time are assigned to the same subperiod although the lengths of their action time vary widely. This may cause a long wait time.

### E. Reducing Overall Operation Time of Automated Manufacturing Machine

In response to the above, the inventors of the present application have developed a method for shortening the overall operation time of the automated manufacturing machine. This method parallelizes subperiods into parallel lines of subperiods in a part of the operation period of the automated manufacturing machine (from the first subperiod to the final subperiod). The actions in one of the lines of subperiods are performed independently of the actions in the other line(s). This can shorten the overall operation time of the automated manufacturing machine, as described below.

The YOGO chart 200 illustrated in FIG. 8B involves wait times in the subperiods with the subperiod numbers 2 and 3. These subperiods (with the subperiod numbers 2 and 3) are thus parallelized by adding new subperiods in parallel to the subperiods with the subperiod numbers 2 and 3. In the area of the parallelized subperiods, both the original subperiods and the added subperiods are assigned with the actions of actuators. The area of the parallelized subperiods is hereafter referred to as a parallel processing portion. The new subperiods added to the parallel processing portion are referred to as parallel subperiods. The original subperiods may be referred to as normal subperiods as appropriate to be distinguished from the parallel subperiods.

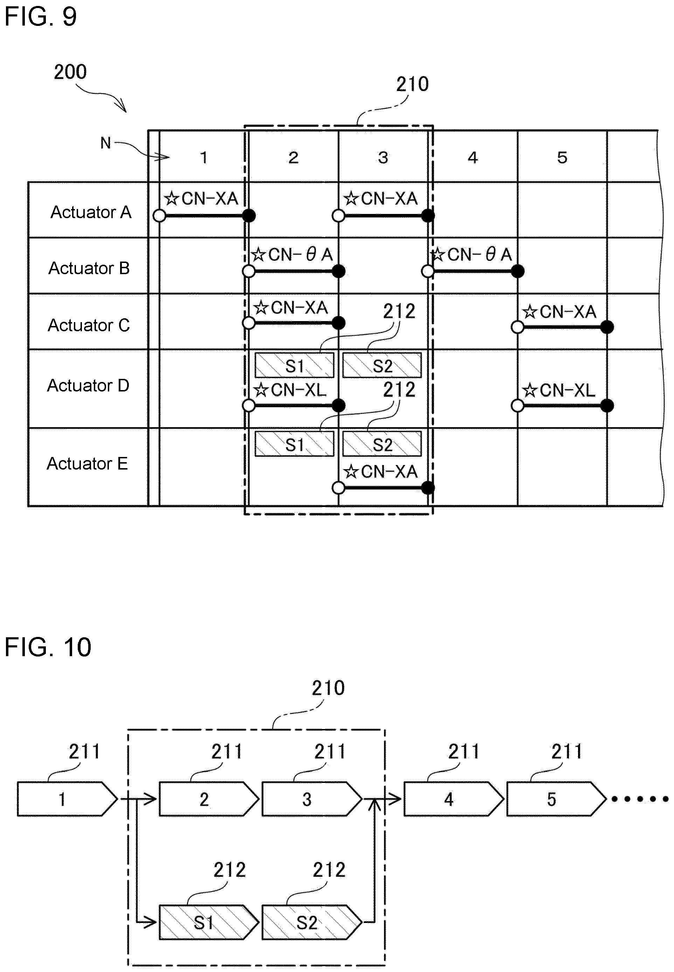

FIG. 9 illustrates the YOGO chart 200 in the present embodiment including the parallel processing portion. In the illustrated example, the chart includes a parallel processing portion 210 for the subperiods with the subperiod numbers 2 and 3. The parallel processing portion 210 is not only divided into the two normal subperiods with the subperiod numbers 2 and 3, but also divided into two parallel subperiods 212. The first parallel subperiod 212, denoted by S1 in the figure, is assigned with the element action of the actuator D. The second parallel subperiod 212, denoted by S2 in the figure, is assigned with the element action of the actuator E. S1 and S2 are the subperiod numbers of the parallel subperiods 212. The parallel subperiod 212 denoted by S1 is hereafter referred to as the parallel subperiod 212 with the subperiod number S1. The parallel subperiod 212 denoted by S2 is hereafter referred to as the parallel subperiod 212 with the subperiod number S2. In the example shown in FIG. 9, the actuator D and the actuator E each correspond to a selected actuator in one or more aspects of the present invention.

FIG. 10 is a conceptual diagram of the YOGO chart 200 shown in FIG. 9 (including the parallel processing portion 210). As illustrated, the two parallel subperiods 212 with the subperiod numbers S1 and S2 are added to the normal subperiods 211 with the subperiod numbers 2 and 3 of the normal subperiods 211. The YOGO chart 200 with this structure can describe the operation below.

The actuator assigned to the normal subperiod 211 with the subperiod number 1 acts first. Upon completion of this action, the actuators assigned to the normal subperiod 211 with the subperiod number 2 and the actuator assigned to the parallel subperiod 212 with the subperiod number S1 act. Upon completion of the actions in the normal subperiod 211 with the subperiod number 2, the actuator assigned to the normal subperiod 211 with the subperiod number 3 acts. Upon completion of the action in the parallel subperiod 212 with the subperiod number S1, the actuator assigned to the parallel subperiod 212 with the subperiod number S2 acts. The action in the normal subperiod 211 with the subperiod number 3 can start before completion of the action in the parallel subperiod 212 with the subperiod number S1. The action in the parallel subperiod 212 with the subperiod number S2 can start before completion of the actions in the normal subperiod 211 with the subperiod number 2. The series of normal subperiods 211 and the series of parallel subperiods 212 are different (specifically, parallel) series. The action assigned to the normal subperiod 211 with the subperiod number 4 starts after completion of both the action in the normal subperiod 211 with the subperiod number 3 and the action in the parallel subperiod 212 with the subperiod number S2.

With the YOGO chart 200 with this structure, the actions in the normal subperiods 211 are performed in order from the first normal subperiod 211 in the same manner as with the known YOGO chart 200. The actions in the parallel subperiods 212 in the parallel processing portion 210 are also performed in order from the first parallel subperiod 212. At the position at which the parallel processing portion 210 starts (specifically, the position at which the parallel subperiod 212 branches from the normal subperiod 211), neither the action in the first normal subperiod 211 nor the action in the first parallel subperiod 212 in the parallel processing portion 210 starts before completion of the action in the normal subperiod 211 immediately preceding the parallel processing portion 210. At the position at which the parallel processing portion 210 ends (specifically, the position at which the normal subperiod 211 and the parallel subperiod 212 join), the action in the normal subperiod 211 following the parallel processing portion 210 does not start before completion of both the action in the final normal subperiod 211 and the action in the final parallel subperiod 212 in the parallel processing portion 210. The YOGO chart 200 in the present embodiment differs from the known YOGO chart mainly in that the actions in the normal subperiods 211 are performed independently of the actions in the parallel subperiods 212 in the parallel processing portion 210. Similarly to the known YOGO chart 200, the partially parallelized YOGO chart 200 can also be used to automatically generate the control program for the automated manufacturing machine.

On the YOGO chart 200 described above, every parallel subperiod 212 in the parallel processing portion 210 is to be assigned with an element action of at least one actuator. When the actions of actuators are performed in order from the first parallel subperiod 212 in the parallel processing portion 210, any parallel subperiod 212 assigned with no element action of any actuator prevents a start of actions in the subsequent parallel subperiod 212.

When an actuator has any element actions assigned to the normal subperiod 211 in the parallel processing portion 210, no element actions of the same actuator may be assigned to the parallel subperiod 212 in the same parallel processing portion 210. In the parallel processing portion 210, actions in the normal subperiod 211 are performed independently of actions in the parallel subperiod 212. When an actuator has any element actions assigned to both the normal subperiod 211 and the parallel subperiod 212 in the same parallel processing portion 210, the element actions may occur at the same timing in each of these subperiods, possibly disabling the element actions in both these subperiods.

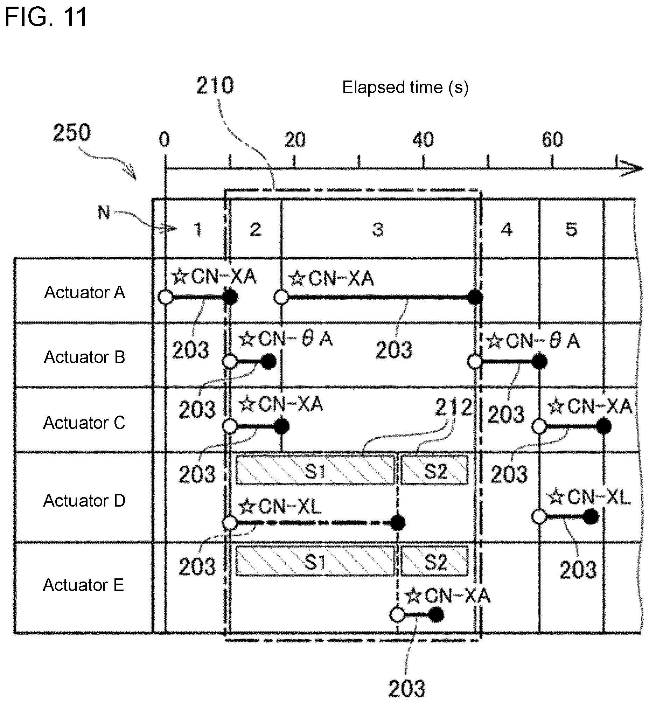

FIG. 11 is the YOGO chart 250 corresponding to the partially parallelized YOGO chart 200 shown in FIG. 9 but rewritten to change the lengths of the action lines 203 to represent the action time lengths of the actuators. The YOGO chart 250 shows the elapsed time at the top. The YOGO chart 250 in FIG. 11 differs from the YOGO chart 250 in FIG. 8B in including parallelized subperiods, but is the same in the action time lengths of the actuators A to E. In FIG. 11, the action lines 203 for the actuator D and the actuator E are dot-dash lines each indicating an action assigned to the parallel subperiod 212.

On the YOGO chart 250 in FIG. 11, while the action in the parallel subperiod 212 with the subperiod number S1 is being performed, the normal subperiod 211 with the subperiod number 2 ends and the action in the normal subperiod 211 with the subperiod number 3 starts. While the action in the normal subperiod 211 with the subperiod number 3 is being performed, the action in the parallel subperiod 212 with the subperiod number S2 starts. This greatly shortens the wait time, thus shortening the overall operation time of the automated manufacturing machine. The partially parallelized YOGO chart 200 can thus shorten the overall operation time of the automated manufacturing machine.

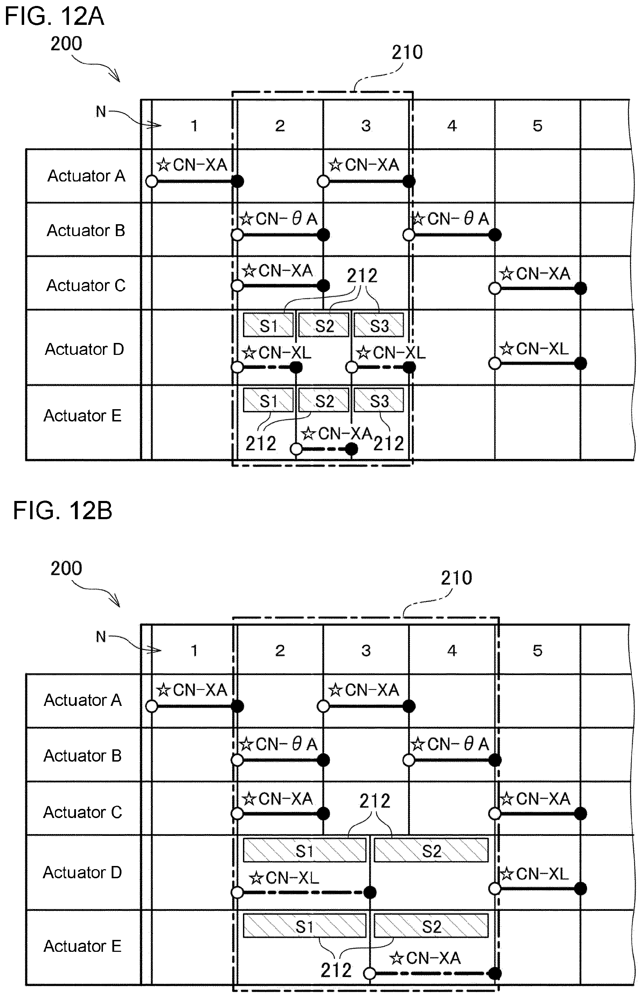

In the example described with reference to FIGs. 9 to 11, the parallel processing portion 210 is a set of two normal subperiods 211 and includes two parallel subperiods 212. In other words, the parallel processing portion 210 includes as many parallel subperiods 212 as the normal subperiods 211. However, the parallel processing portion 210 may include different numbers of the parallel subperiods 212 and the normal subperiods 211. In the example shown in FIG. 12A, the parallel processing portion 210 includes two normal subperiods 211 and three parallel subperiods 212 with the subperiod numbers S1 to S3. In the example shown in FIG. 12B, the parallel processing portion 210 includes three normal subperiods 211 and two parallel subperiods 212 with the subperiod numbers S1 and S2.

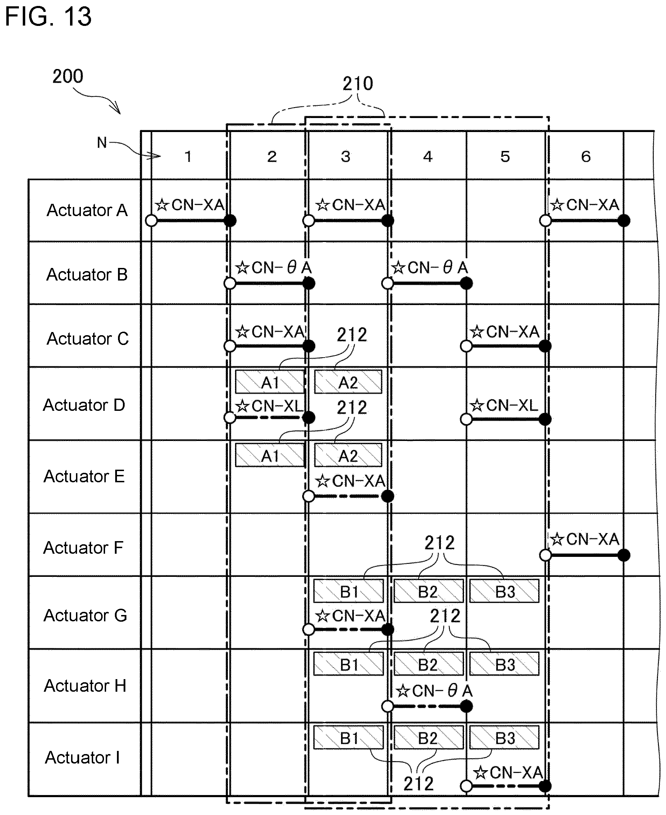

The single YOGO chart 200 may include multiple parallel processing portions 210. The parallel processing portions 210 may overlap each other at least partially. In the example shown in FIG. 13, the parallel processing portion 210 enclosed by the dot-dash line includes the subperiods with the subperiod numbers 2 and 3. The parallel processing portion 210 with the dot-dash line includes two parallel subperiods 212 with subperiod numbers A1 and A2. The parallel processing portion 210 enclosed by the two-dot-dash line includes the subperiods with the subperiod numbers 3 to 5. The parallel processing portion 210 with the two-dot-dash line includes three parallel subperiods 212 with subperiod numbers B1 to B3. In this manner, the single YOGO chart 200 may include multiple parallel processing portions 210 that may overlap each other at least partially. In the example shown in FIG. 13, the actuators D, E, and G to I each correspond to a selected actuator in one or more aspects of the present invention.

In the examples shown in FIGs. 9, 12A, 12B, and 13, each parallel processing portion 210 includes the parallel subperiods 212 that are assigned to actuators adjacent to each other on the YOGO chart 200. More specifically, the YOGO charts 200 in FIGs. 9, 12A, and 12B each include the parallel subperiods 212 that are assigned to the actuator D and the actuator E. The YOGO chart 200 in FIG. 13 includes two parallel processing portions 210, one of which includes the parallel subperiods 212 assigned to the actuators D and E, and the other of which includes the parallel subperiods 212 assigned to the actuators G to I. However, each parallel processing portion 210 may include the parallel subperiods 212 that are assigned to actuators separate from each other on the YOGO chart 200 (e.g., the actuator A and the actuator D).

### F. Control Program Generation Apparatus 110

The partially parallelized YOGO chart 200 is converted to a control program by the control program generation apparatus 110 described below. The control program generation apparatus 110 in the present embodiment is incorporated in the control apparatus 100, together with an operation control apparatus 120 that controls the operation of the automated manufacturing machine using the generated control program.

### F-1. Overview of Control Apparatus 100 and Control Program Generation Apparatus 110

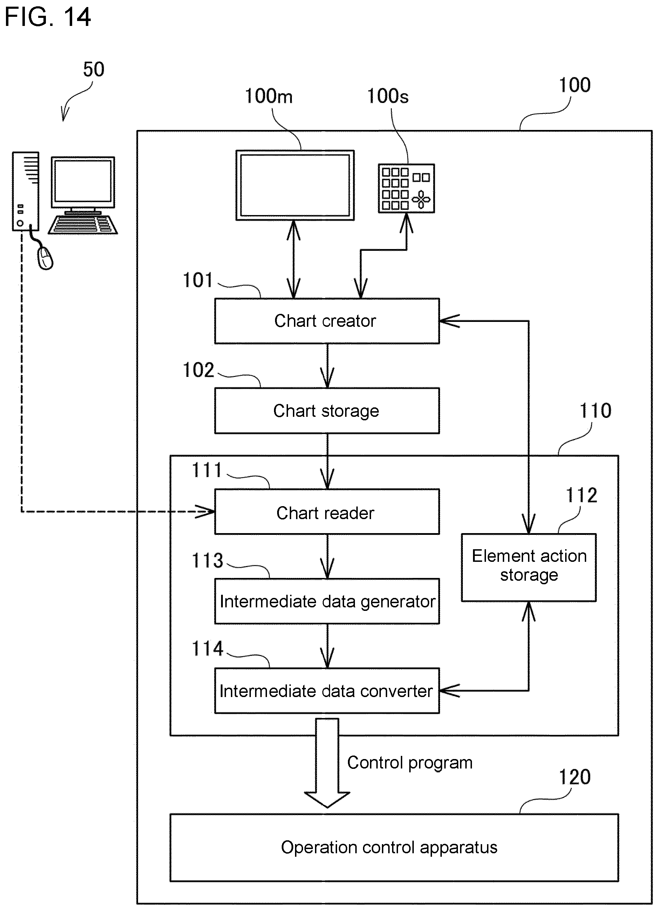

FIG. 14 is a diagram of the control apparatus 100 incorporating the control program generation apparatus 110. As illustrated, the control apparatus 100 includes a chart creator 101, a chart storage 102, the control program generation apparatus 110, and the operation control apparatus 120. The control program generation apparatus 110 further includes a chart reader 111, an element action storage 112, an intermediate data generator 113, and an intermediate data converter 114. These units are conceptual representations of functions to be included in the control apparatus 100 to create and store the YOGO chart 200, and functions to be included in the control program generation apparatus 110 to generate the control program by reading the YOGO chart 200. The control apparatus 100 and the control program generation apparatus 110 thus may not be combinations of components corresponding to these units. These units can be implemented in various forms, such as a program executable by a central processing unit (CPU), an electronic circuit combining an integrated circuit (IC) chips and large-scale integration (LSI) circuits, or a combination of these.

The chart creator 101 is connected to, for example, a monitor screen 100m and operation buttons 100s. A mechanical engineer with sufficient knowledge about the automated manufacturing machine, such as the pipe bender 10, creates the YOGO chart 200 as illustrated in FIGs. 9, 12A, 12B, and 13 by operating the operation buttons 100s while viewing the monitor screen 100m. Any engineer with sufficient knowledge about the operation of the automated manufacturing machine can easily create the YOGO chart 200.

In the present embodiment, the element actions 206 are written on the YOGO chart 200 basically using the action identifiers 206a and the parameter identifiers 206b. The action identifiers 206a, the parameter identifiers 206b, and parameter values corresponding to the parameter identifiers 206b are stored in the element action storage 112. The chart creator 101 refers to the element action storage 112 to write the element actions 206 on the YOGO chart 200. The complete YOGO chart 200 is stored into the chart storage 102.

The chart reader 111 in the control program generation apparatus 110 reads the YOGO chart 200 stored in the chart storage 102 and outputs the chart to the intermediate data generator 113. The intermediate data generator 113 analyzes the read YOGO chart 200 to generate intermediate data (described later), and outputs the intermediate data to the intermediate data converter 114. The process for generating the intermediate data from the YOGO chart will be described in detail later. In some embodiments, the chart reader 111 may read the YOGO chart 200 from a computer 50 that is separate from the control apparatus 100, instead of reading the YOGO chart 200 from the chart storage 102.

Upon receiving the intermediate data, the intermediate data converter 114 refers to the element action storage 112 to generate the control program from the intermediate data. The process for generating the control program from the intermediate data will be described in detail later. The intermediate data converter 114 then outputs the resultant control program to the operation control apparatus 120 (described later). In the present embodiment, the intermediate data generator 113 and the intermediate data converter 114 correspond to a control program generator in one or more aspects of the present invention.

### F-2. Control Program Generation Process

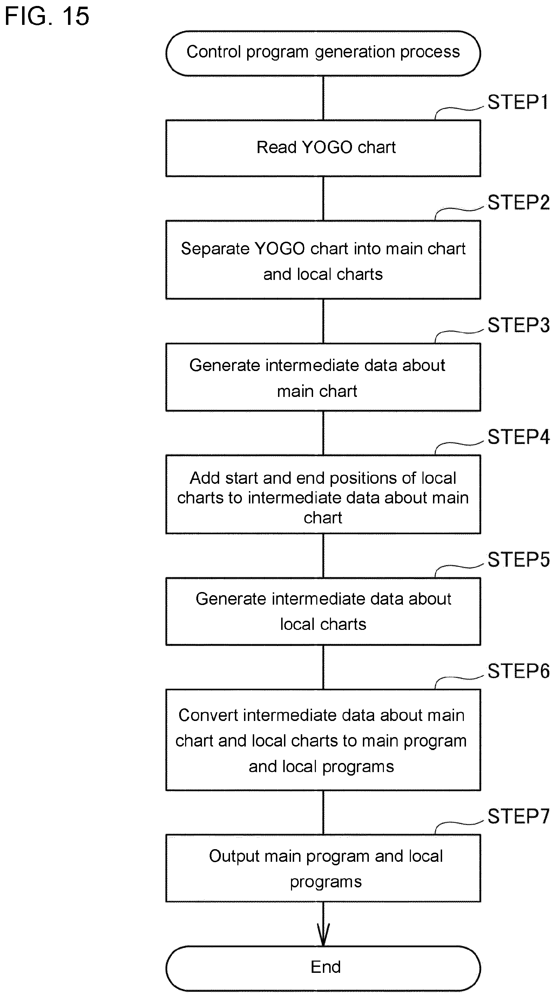

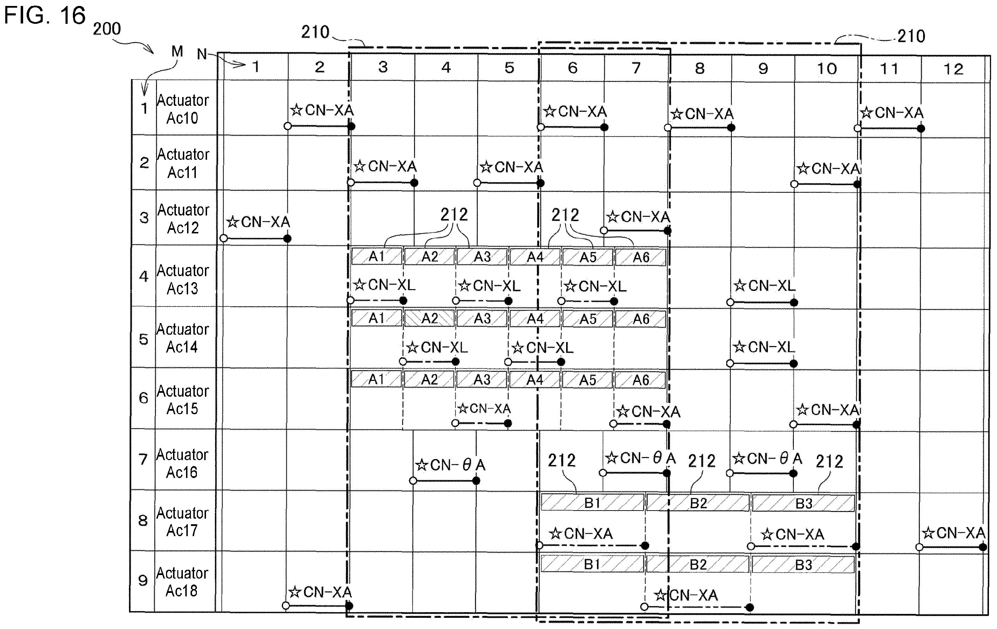

FIG. 15 is a flowchart showing the overview of a control program generation process performed by the above control program generation apparatus 110. In the control program generation process, as shown in the figure, the YOGO chart 200 is read first (STEP 1). In this example, the YOGO chart 200 illustrated in FIG. 16 is read.

The YOGO chart 200 in FIG. 16 includes two parallel processing portions 210, one of which includes the subperiods with the subperiod numbers 3 to 7, and the other of which includes the subperiods with the subperiod numbers 6 to 10. The first parallel processing portion 210 enclosed by the dot-dash line in the figure includes six parallel subperiods 212 with the subperiod numbers A1 to A6 that are assigned with the actuators Ac13 to Ac15 with the actuator numbers M of 4 to 6. The second parallel processing portion 210 enclosed by the two-dot-dash line in the figure includes three parallel subperiods 212 with the subperiod numbers B1 to B3 that are assigned with the actuators Ac17 and Ac18 with the actuator numbers M of 8 and 9. In the first parallel processing portion 210, the actuators Ac13 to Ac15 each correspond to a selected actuator in one or more aspects of the present invention. In the second parallel processing portion 210, the actuators Ac17 and Ac18 each correspond to a selected actuator in one or more aspects of the present invention.

The YOGO chart 200 read in STEP 1 in FIG. 15 is separated into a portion including the normal subperiods 211 and a portion including the parallel subperiods 212 (STEP 2). The portion of the YOGO chart 200 including the parallel subperiods 212 is hereafter referred to as a local chart. The portion of the YOGO chart 200 other than the local chart (specifically, the portion including the normal subperiods 211) is referred to as a main chart.

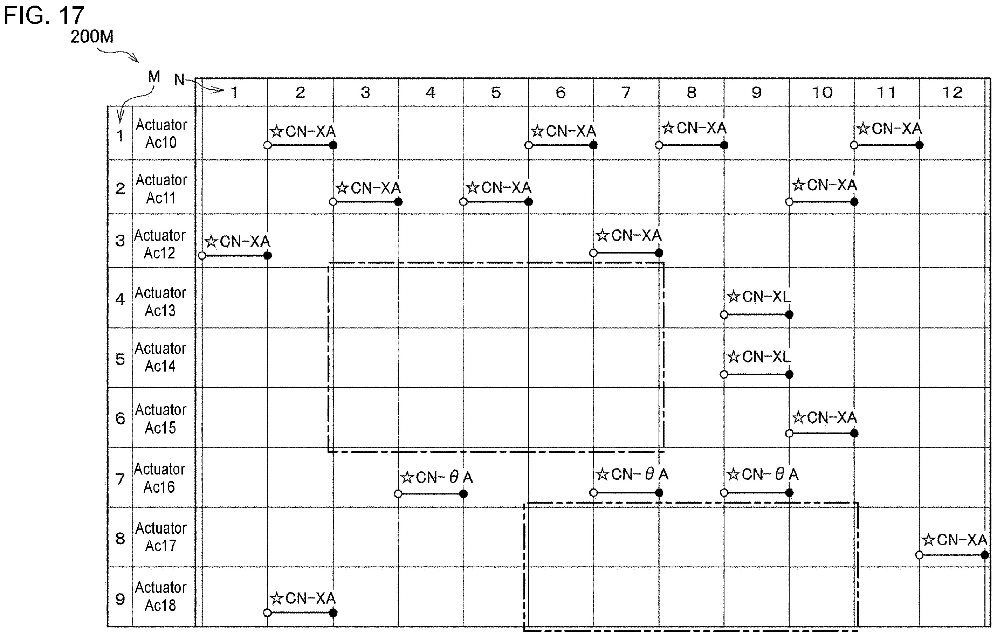

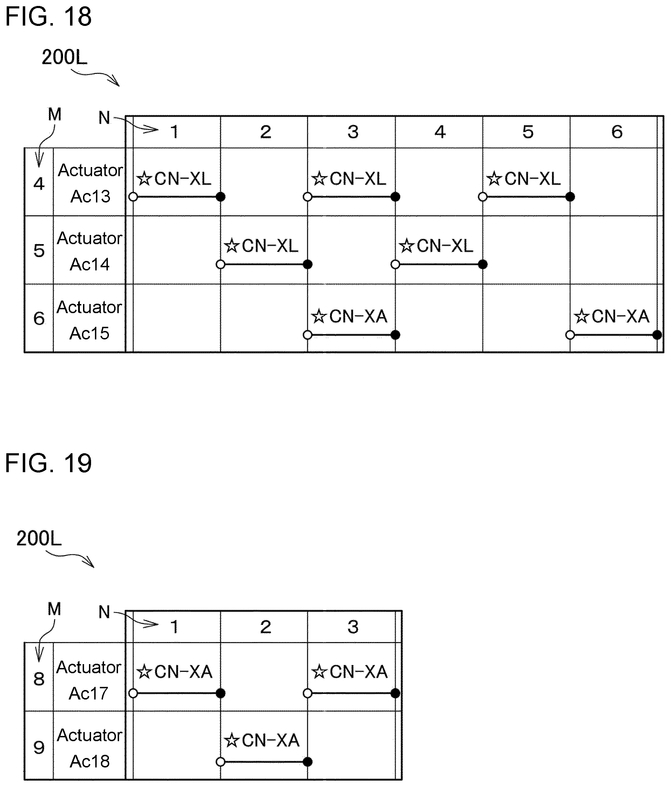

FIG. 17 is a main chart 200M separated from the YOGO chart 200 in FIG. 16. The portions enclosed by the dot-dash line and the two-dot-dash line are portions from which local charts have been extracted. FIG. 18 is a local chart 200L extracted from the portion enclosed by the dot-dash line in FIG. 17. FIG. 19 is a local chart 200L extracted from the portion enclosed by the two-dot-dash line in FIG. 17. On each local chart 200L extracted from the YOGO chart 200, the subperiods are renumbered starting from the subperiod number 1 (refer to FIGs. 18 and 19).

After the YOGO chart 200 is separated into the main chart 200M and the local charts 200L in STEP 2 in FIG. 15, an intermediate data generation process described below is performed on the main chart 200M to generate intermediate data 300M about the main chart 200M (STEP 3).

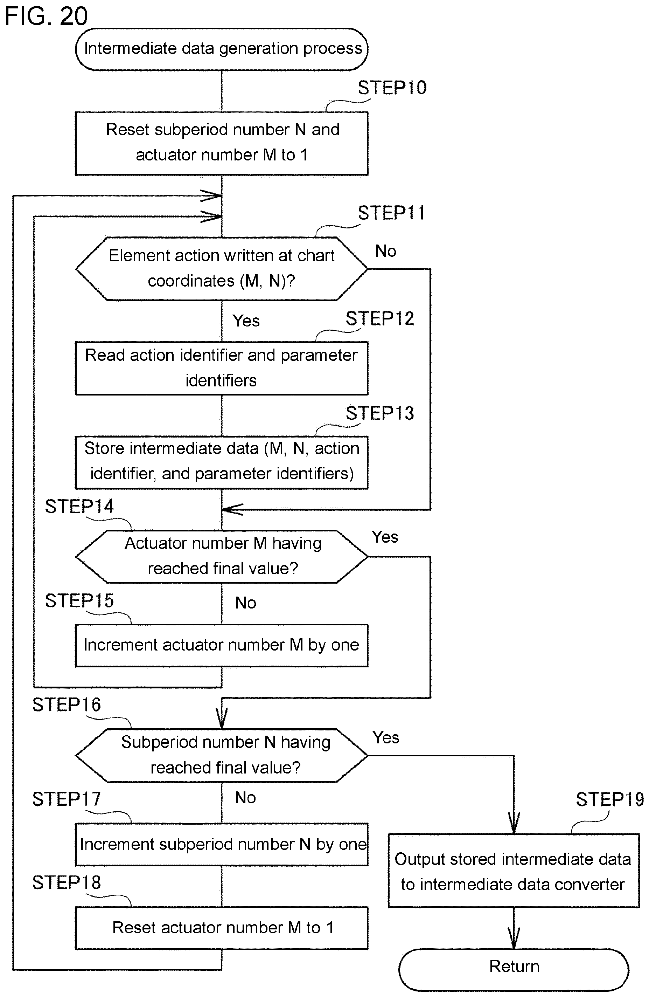

FIG. 20 is a flowchart of the intermediate data generation process. This process is performed by the intermediate data generator 113 in the control program generation apparatus 110. As illustrated, in the intermediate data generation process, the subperiod number N and the actuator number M are each reset to 1 first (STEP 10). The determination is performed as to whether an element action is written at the chart coordinates (M, N) on the main chart 200M (STEP 11). The chart coordinates (M, N) indicate the coordinate position on the main chart 200M identified by the combination of the actuator number M and the subperiod number N. Immediately after STEP 10 in which the subperiod number N and the actuator number M are reset, N and M are both 1. Thus, the determination is performed as to whether an element action is written at the chart coordinates (1, 1) on the main chart 200M.

On the main chart 200M illustrated in FIG. 17, no element action is written at the chart coordinates (1, 1), and the determination result in STEP 11 is negative. The determination is then performed as to whether the actuator number M has reached the final value (STEP 14). The final value for the actuator number M is 9, with the nine actuators Ac10 to Ac18 being included in the main chart 200M illustrated in FIG. 17. For the determination in STEP 14 as to whether an element action is written at the chart coordinates (1, 1), the determination result is negative. The actuator number M is then incremented by one (STEP 15). The actuator number M after the increment is used to determine again whether an element action is written at the chart coordinates (M, N) (STEP 11).

For every increment, by one, of the actuator number M with the subperiod number N fixed to 1, the determination is performed as to whether an element action is written at the chart coordinates (M, 1) in the above manner. When the chart coordinates (M, 1) with a written element action are reached, the determination result in STEP 11 is affirmative.

When the determination result in STEP 11 is affirmative, the action identifier 206a and the parameter identifiers 206b of the element action written at the chart coordinates are read (STEP 12). On the main chart 200M illustrated in FIG. 17, when the chart coordinates (3, 1) are reached, the determination result in STEP 11 is affirmative. This causes the action identifier 206a and the parameter identifiers 206b of the element action 206 written at the chart coordinates (3, 1) on the main chart 200M to be read. The parameter identifiers 206b are not shown on the main chart 200M in FIG. 17 to avoid complexity in the figure.

Data, or hereafter intermediate data (N, M, the action identifier, and the parameter identifiers), is then stored into a memory (STEP 13). The data includes the chart coordinates (M, N), the action identifier 206a, and the parameter identifiers 206b for the read element action 206. After the intermediate data read from the main chart 200M is stored into the memory (STEP 13), the determination is performed as to whether the actuator number M has reached the final value (nine in this example) (STEP 14). When the actuator number M is yet to reach the final value (No in STEP 14), the actuator number M is incremented by one (STEP 15). The process then returns to STEP 11 to determine again whether an element action is written at the chart coordinates (M, N) on the main chart 200M.

When the actuator number M reaches the final value (Yes in STEP 14), the determination is performed as to whether the subperiod number N has reached the final value (STEP 16). In the main chart 200M illustrated in FIG. 17, the final subperiod number is 12, and the final value of the subperiod number N is 12.

When the subperiod number N is yet to reach the final value (No in STEP 16), the subperiod number N is incremented by one (STEP 17) and the actuator number M is reset to 1 (STEP 18). The process then returns to STEP 11 to determine again whether an element action is written at the chart coordinates (M, N) on the main chart 200M. In this manner, the determination is performed for the subperiod with the subperiod number N of 1 from top to bottom, then for the subperiod with the subperiod number N of 2 from top, and then for the subperiod with the subperiod number N of 3. In this manner, the element actions written on the main chart 200M are read in order from the subperiod with a lower subperiod number N to the subperiod with a higher subperiod number N. The read element actions are stored as intermediate data into the memory. When the subperiod number N is finally determined to have reached the final value (Yes in STEP 16) after the repeated processes above, the element actions written on the main chart 200M have been all read. The intermediate data stored in the memory is then read and output to the intermediate data converter 114 (refer to FIG. 14) (STEP 19).

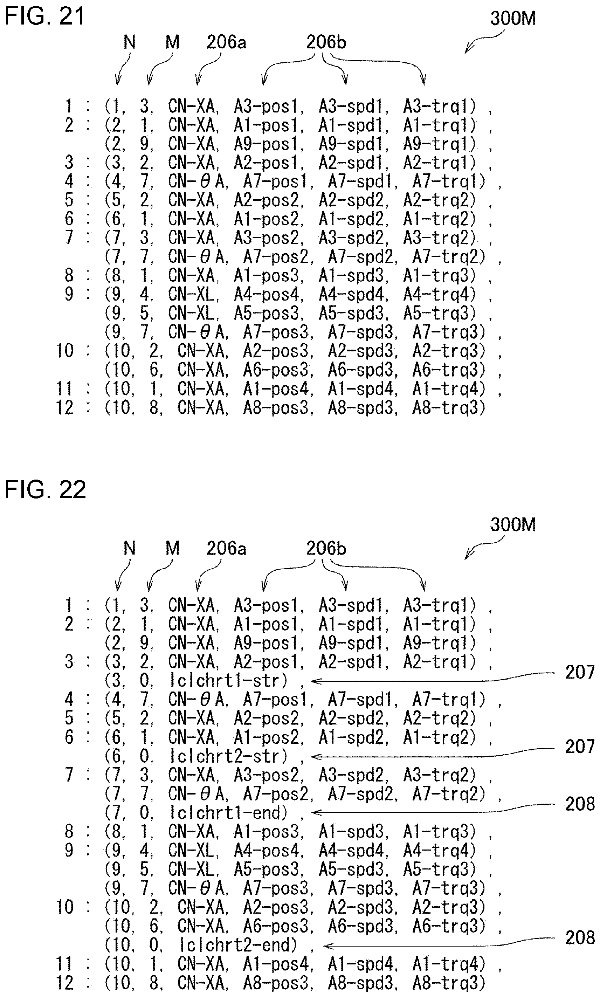

FIG. 21 illustrates the intermediate data 300M generated from the main chart 200M in FIG. 17. As illustrated, the intermediate data 300M is a collection of datasets (hereafter, data records) each including the subperiod number N, the actuator number M, the action identifier 206a, and the parameter identifiers 206b listed in this order. The subperiod number N in each data record can take any value from 1 to the final value of the subperiod number N. The actuator number M can take any actuator number M written on the main chart 200M. Each subperiod number N on the main chart 200M is included in one or more of the data records. Each actuator number M on the main chart 200M is included in one or more of the data records. When the intermediate data 300M is output, the intermediate data generation process in FIG. 20 is complete. The process then returns to the control program generation process in FIG. 15.

After the intermediate data 300M about the main chart 200M is generated as described above, the start positions and the end positions of the local charts 200L are added to the intermediate data 300M (STEP 4). On the YOGO chart 200 shown in FIG. 16, the first parallel processing portion 210 enclosed by the dot-dash line includes the subperiods with the subperiod numbers 3 to 7. The first local chart 200L thus has the start position being the subperiod with the subperiod number 3 and the end position being the subperiod with the subperiod number 7. A data record representing the start of the first local chart 200L is thus added at the end of the data record with the subperiod number 3 in the intermediate data 300M. A data record representing the end of the first local chart 200L is also added at the end of the data record with the subperiod number 7 in the intermediate data 300M.

FIG. 22 is a diagram of the intermediate data 300M to which the start positions and the end positions of the local charts 200L are added. In the figure, the data record 207 (3, 0, lclchrt1-str) represents the start position of the local chart 200L. The data record 208 (7, 0, lclchrt1-end) represents the end position of the local chart 200L. The data piece lclchrt1-str in the data record 207 for the start position represents the start of the first local chart 200L. The data piece lclchrt1-end in the data record 208 for the end position represents the end of the first local chart 200L. The first data piece in the data records 207 and 208 is the subperiod number at which the local chart 200L starts or ends. The second data piece in the data records 207 and 208 is 0, indicating that these data records represent the start position or the end position of the local chart 200L. In a normal data record (a data record representing the element action of an actuator), the second data piece represents the actuator number M, which is a natural number starting from 1 and cannot be 0. The second data piece of 0 in the data record thus indicates that the data record is about the local chart 200L but is not a normal data record representing the element action of an actuator.

The same applies to the second local chart 200L shown in FIG. 16. More specifically, the start position and the end position of the local chart 200L are added to the intermediate data 300M about the main chart 200M. On the second local chart 200L, which is associated with the subperiods with the subperiod numbers 6 to 10, has the start position being the subperiod with the subperiod number 6 and the end position being the subperiod with the subperiod number 10. Thus, as shown in FIG. 22, the data record 207 (6, 0, lclchrt2-str) is added to the end of the data record with the subperiod number 6 in the intermediate data 300M to indicate the start position of the second local chart 200L. The data record 208 (10, 0, lclchrt2-end) is added to the end of the data record with the subperiod number 10 to indicate the end position of the second local chart 200L. The data piece lclchrt2-str represents the start of the second local chart 200L. The data piece lclchrt2-end represents the end of the second local chart 200L.

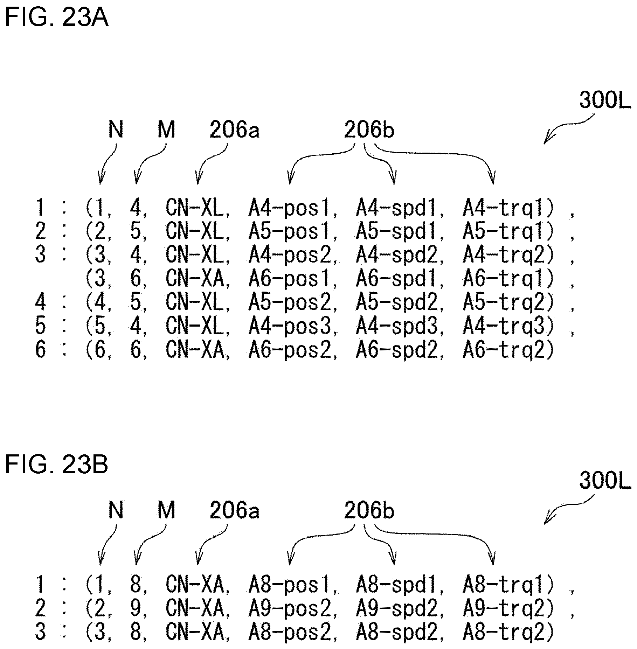

After the start positions and the end positions of the local charts 200L are added to the intermediate data 300M about the main chart 200M as described above (STEP 4 in FIG. 15), intermediate data 300L about the local charts 200L is generated (STEP 5). As described above, the intermediate data generation process in FIG. 20 is performed on each of the two local charts 200L shown in FIGs. 18 and 19 extracted from the YOGO chart 200 shown in FIG. 16. This generates the intermediate data 300L in FIG. 23A from the local chart 200L in FIG. 18 and the intermediate data 300L in FIG. 23B from the local chart 200L in FIG. 19.

The generated intermediate data 300M about the main chart 200M and the generated intermediate data 300L about the two local charts 200L are converted to control programs 400 (STEP 6). The control program 400 resulting from conversion of the intermediate data 300M about the main chart 200M is referred to as a main program. The control programs 400 resulting from conversion of the intermediate data 300L about the local charts 200L are referred to as local programs.

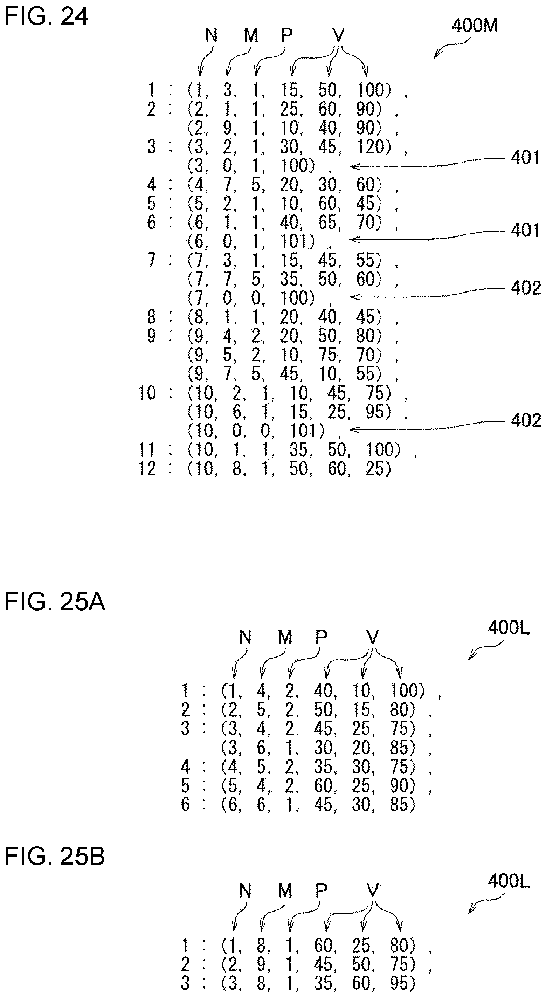

FIG. 24 is a diagram of a main program 400M resulting from conversion of the intermediate data 300M about the main chart 200M shown in FIG. 22. FIG. 25A is a diagram of a local program 400L resulting from conversion of the intermediate data 300L about the local chart 200L shown in FIG. 23A. FIG. 25B is a diagram of a local program 400L resulting from conversion of the intermediate data 300L about the local chart 200L shown in FIG. 23B. For convenience of explanation, the local programs 400L will be described first.

As shown in FIGs. 25A and 25B, the local programs 400L are each a collection of datasets (data records) including the subperiod number N, the actuator number M, a program element number P, and parameter values V listed in this order. The data records in the local programs 400L shown in FIGs. 25A and 25B are generated from the data records in the intermediate data 300L shown in FIGs. 23A and 23B. More specifically, the action identifiers 206a in the data records in the intermediate data 300L are replaced with the program element numbers P corresponding to the action identifiers 206a, and the parameter identifiers 206b in the data records in the intermediate data 300L are replaced with the parameter values V corresponding to the parameter identifiers 206b, thus generating the data records in the local programs 400L. The local programs 400L thus generated are each assigned with a specific identification number and stored into the memory (not shown) in the control program generation apparatus 110 shown in FIG. 14.

The intermediate data 300M about the main chart 200M can also be converted to the main program 400M substantially in the same manner. However, as described above with reference to FIG. 22, the intermediate data 300M about the main chart 200M additionally includes the data records 207 representing the start positions and the data records 208 representing the end positions of the local charts 200L. Such data records are converted in the manner described below.

The data records 207 indicating the start positions each include the subperiod number N, 0, and the data piece indicating the start of the local chart 200L in this order. The second data piece 0 indicates that the data record is about the local chart 200L. The first two data pieces are used directly in the main program 400M. The third data piece (the data piece indicating the start of the local chart 200L) is converted to 1 indicating the start of the local chart 200L. The fourth data piece is additionally stored to indicate the identification number of the local program 400L generated from the local chart 200L. The main program 400M shown in FIG. 24 includes data records 401 that are generated from the data records 207 indicating the start positions. For example, the data record 401 (3, 0, 1, 100) in FIG. 24 indicates that the local program 400L starts at the subperiod with the subperiod number 3 and has an identification number of 100.

The data records 208 indicating the end positions are converted substantially in the same manner. More specifically, the first two data pieces in each data record 208 indicating the end position are used directly in the main program 400M. The third data piece (the data piece indicating the end of the local chart 200L) is converted to 0 indicating the end of the local chart 200L. The fourth data piece is additionally stored to indicate the identification number of the corresponding local program 400L. The main program 400M shown in FIG. 24 includes data records 402 that are generated from the data records 208 indicating the end positions. For example, the data record 402 (7, 0, 0, 100) in FIG. 24 indicates that the local program 400L ends at the subperiod with the subperiod number 7 and has an identification number of 100.

The above conversion from the intermediate data 300M and the intermediate data 300L to the main program 400M and the local programs 400L are performed by the intermediate data converter 114 in FIG. 14 referring to the element action storage 112. The element action storage 112 stores the action identifiers 206a and the program element numbers in a manner associated with each other (refer to FIG. 5). As illustrated in FIGs. 7A to 7E, the element action storage 112 also stores the parameter identifiers 206b and the parameter values V defined for the parameter identifiers 206b in a manner associated with each other. The intermediate data converter 114 refers to these pieces of data and replaces the action identifiers 206a and the parameter identifiers 206b in the intermediate data with the program element numbers P and the parameter values V.

The main program 400M and the local programs 400L generated from the intermediate data 300M and the intermediate data 300L as described above (STEP 6 in FIG. 15) are output to the operation control apparatus 120 (STEP 7). This completes the control program generation process shown in FIG. 15.

### G. Overview of Controlling Automated Manufacturing Machine Using Control Programs

The operation control apparatus 120 in the control apparatus 100 stores, into the memory (not shown), the control programs (specifically, the main program 400M and the local programs 400L) received from the control program generation apparatus 110 and controls the operation of the automated manufacturing machine in the manner described below.

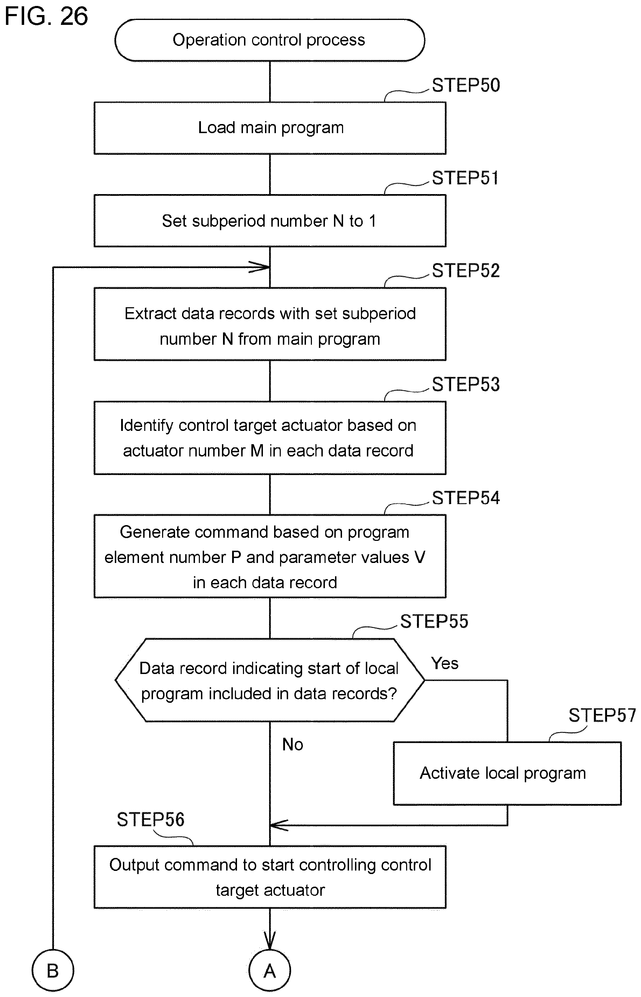

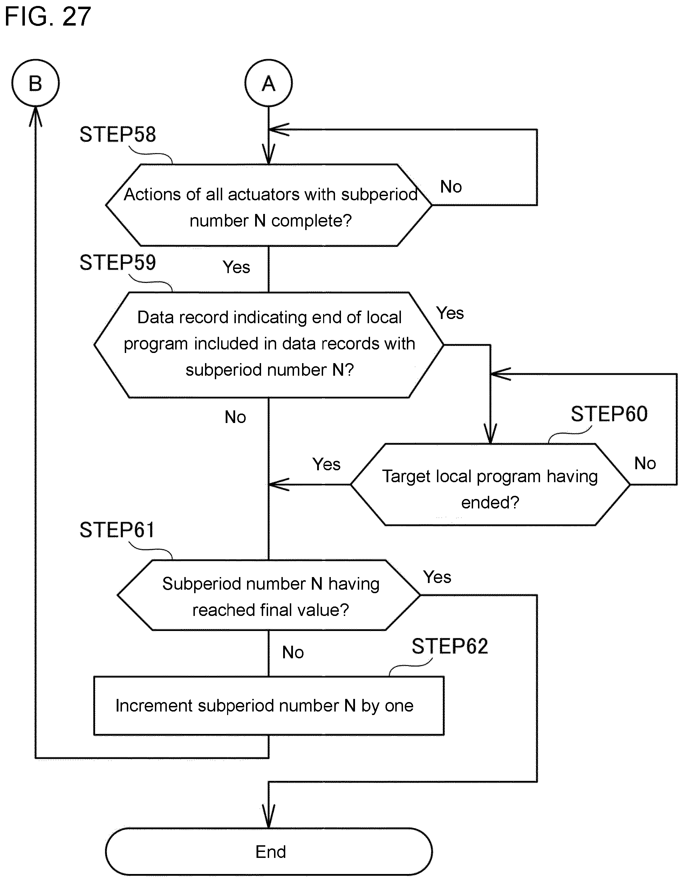

FIGs. 26 and 27 are flowcharts of the operation control process performed by the operation control apparatus 120 to control the operation of the automated manufacturing machine using the control programs. At the start of the operation control process, the main program 400M stored in the memory is loaded first (STEP 50). The subperiod number N is set to 1 (STEP 51). Data records with the set subperiod number N are extracted from the data records in the main program 400M (STEP 52).

Immediately after the start of the operation control process, the subperiod number N is set to 1, indicating that the data record (1, 3, 1, 15, 50, 100) is extracted from the main program 400M in FIG. 24. The first number in the data record is the subperiod number N. The second number is the actuator number M. The third number is the program element number P. The fourth to sixth numbers in the record are the parameter values V specified for the program element. The control target actuator is identified based on the actuator number M in each data record (STEP 53). The command to be output to the actuator is generated based on the program element number P and the parameter values V (STEP 54).

The determination is then performed as to whether the data records with the subperiod number N extracted in STEP 52 include a data record 401 indicating the start of the local program 400L (STEP 55). In the main program 400M in FIG. 24, the data record with the subperiod number N of 1 includes no data record 401 indicating the start of the local program 400L. In this case, the determination result in STEP 55 is negative. The command generated in STEP 54 is output to start controlling the action of the control target actuator identified in STEP 53 (STEP 56).

The determination is then performed as to whether the actions of all the actuators with their control started in STEP 56 are complete (STEP 58 in FIG. 27). When the action of any actuator is incomplete (No in STEP 58), the determination in STEP 58 is repeatedly performed. The process is in a wait state until the actions of all the actuators are complete. Upon completion of the actions of all the actuators (Yes in STEP 58), the determination is performed as to whether the data records extracted in STEP 52 include a data record indicating the end of the local program 400L (STEP 59). When the subperiod number N is 1, the data record cannot include a data record indicating the end of the local program 400L. In this case, the determination result in STEP 59 is negative.

The determination is then performed as to whether the subperiod number N has reached the final value (STEP 61). When the subperiod number N is 1, the subperiod number N is yet to reach the final value (No in STEP 61). In this case, the subperiod number N is incremented by one (STEP 62), and the process returns to STEP 52 in FIG. 26 to extract data records with another subperiod number N from the main program 400M. The processes described above are then performed on the extracted data records. More specifically, the control target actuator is identified (STEP 53), the command for the identified actuator is generated (STEP 54), and then the determination is performed as to whether the extracted data records include a data record indicating the start of the local program 400L (STEP 55). In the main program 400M illustrated in FIG. 24, when the data records with the subperiod number N of 2 are extracted, the data records include no data record indicating the start of the local program 400L. When the data records with the subperiod number N of 3 are extracted, the data records include a data record indicating the start of the local program 400L.

When the extracted data records include no data record indicating the start of the local program 400L in STEP 55 (No in STEP 55), the command generated in STEP 54 is output to start controlling the control target actuator identified in STEP 53 (STEP 56). When the extracted data records include a data record indicating the start of the local program 400L (Yes in STEP 55), the local program 400L identified by the identification number in this data record is activated (STEP 57). The command is then output to start controlling the control target actuator (STEP 56). Upon activation of the local program 400L, a local program execution process described below is started.

The determination is then performed as to whether the actions of all the actuators are complete (STEP 58 in FIG. 27). When the action of any actuator is incomplete (No in STEP 58), the process is in a wait state with the determination in STEP 58 being repeatedly performed. Upon completion of the actions of all the actuators (Yes in STEP 58), the determination is performed as to whether the data records extracted in STEP 52 include a data record indicating the end of the local program 400L (STEP 59). When the extracted data records include a data record indicating the end of the local program 400L (Yes in STEP 59), the determination is performed as to whether the target local program 400L has ended (STEP 60). When the local program 400L has yet to end (No in STEP 60), the process is in a wait state with the determination in STEP 60 being repeatedly performed. When the target local program 400L has ended (Yes in STEP 60), the determination is performed as to whether the subperiod number N has reached the final value (STEP 61). When the subperiod number N is yet to reach the final value (No in STEP 61), the subperiod number N is incremented by one (STEP 62). The process then returns to STEP 52 in FIG. 26 to extract data records with another subperiod number N from the main program 400M.

The processes from STEP 52 to STEP 61 are performed with the subperiod number N being incremented by one until the subperiod number N reaches the final value (Yes in STEP 61). This completes the operation control process shown in FIGs. 26 and 27.

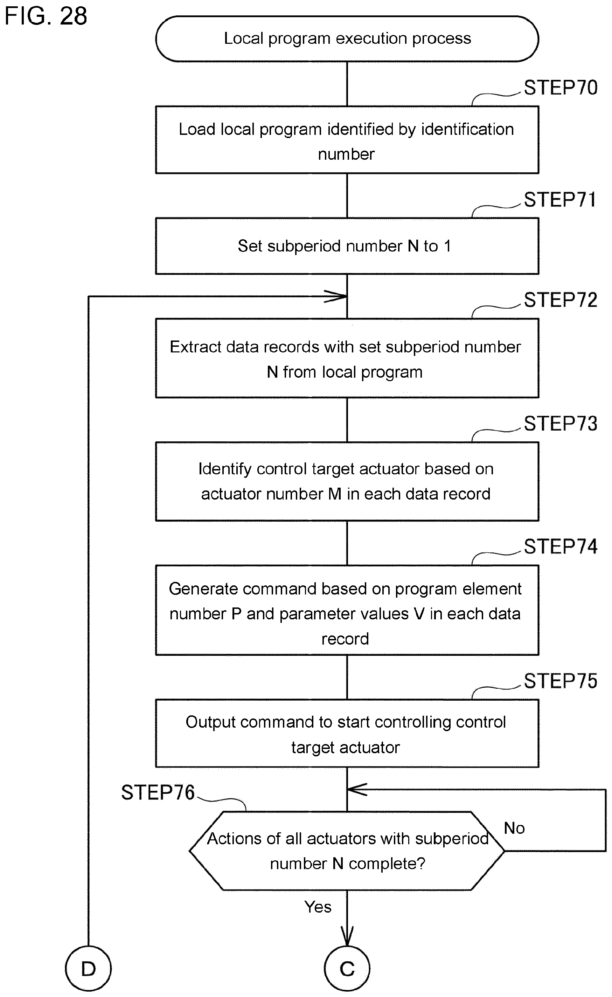

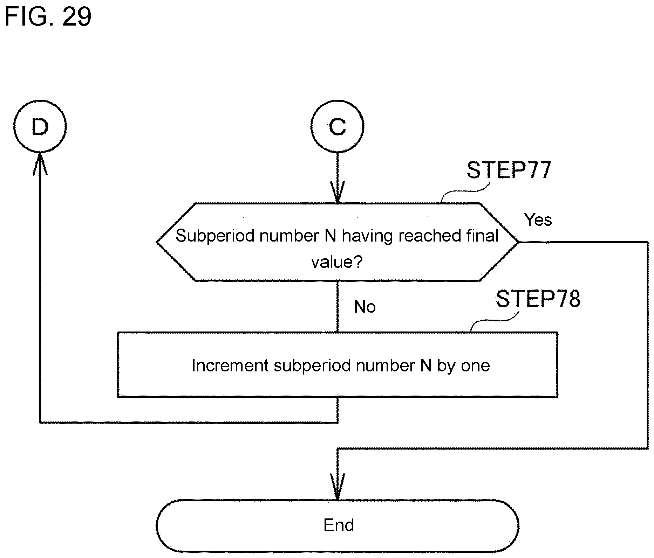

When the local program 400L is activated in STEP 57 in the operation control process described above, the local program execution process below is started. FIGs. 28 and 29 are flowcharts of the local program execution process activated in the operation control process. The local program execution process is different from the operation control process simply in that the local program execution process executes the local program 400L whereas the operation control process executes the main program 400M. Thus, the local program execution process is substantially the same as the operation control process. The local program execution process will now be described briefly focusing on this difference.

At the start of the local program execution process, the local program 400L identified by the identification number is loaded first (STEP 70). The identification number is specified when the local program 400L is activated in the operation control process (refer to STEP 57 in FIG. 26). The local program 400L is stored in the memory in the control program generation process described above with reference to FIG. 15 (refer to STEP 7).

The subperiod number N is set to 1 (STEP 71). Data records with the set subperiod number N are extracted from the data records in the local program 400L (STEP 72). The control target actuator is identified based on the actuator number M in each data record (STEP 73). The command to be output to the actuator is generated based on the program element number P and the parameter values V (STEP 74).

In the operation control process described above, the determination is then performed as to whether the extracted data records include a data record 401 indicating the start of the local program 400L (STEP 55 in FIG. 26). However, in the local program execution process in the present embodiment, a local program 400L does not cause another local program 400L to be activated. The local program execution process thus does not perform a determination corresponding to STEP 55 in FIG. 26.

The command is output to start controlling the action of the control target actuator (STEP 75). The determination is then performed as to whether the actions of all the actuators are complete (STEP 76). When the action of any actuator is incomplete (No in STEP 76), the process is in a wait state with the determination in STEP 76 being repeatedly performed. Upon completion of the actions of all the actuators (Yes in STEP 76), the determination is performed as to whether the subperiod number N has reached the final value (STEP 77 in FIG. 29). In the operation control process described above, the determination is performed as to whether a local program 400L ends (STEP 59 in FIG. 27) before the determination is performed as to whether the subperiod number N has reached the final value. However, in the local program execution process in the present embodiment, a local program 400L does not cause another local program 400L to be activated. The local program execution process thus does not perform a determination corresponding to STEP 59 in FIG. 27.

When the subperiod number N is yet to reach the final value as a result of the determination (No in STEP 77), the subperiod number N is incremented by one (STEP 78). The process then returns to STEP 72 in FIG. 28 to extract data records with another subperiod number N from the local program 400L. When the subperiod number N has reached the final value (Yes in STEP 77), the local program 400L has ended. The local program execution process shown in FIGs. 28 and 29 is thus complete.

As described in detail above, the YOGO chart 200 being partially parallelized reduces a wait time during the action of each actuator. This can shorten the overall operation time from the start to the end of the operation of the automated manufacturing machine when the operation is controlled using the control program 400 that is automatically generated from the YOGO chart 200.

### H. Modification

The above embodiment may be modified variously. Modifications will be described below focusing on their differences from the above embodiment.

### H-1. First Modification

In the above embodiment, the YOGO chart 200 directly incorporates the local charts 200L (refer to FIG. 16). However, the YOGO chart 200 may simply include local chart identifiers indicating the local charts 200L that are separate from the YOGO chart 200.

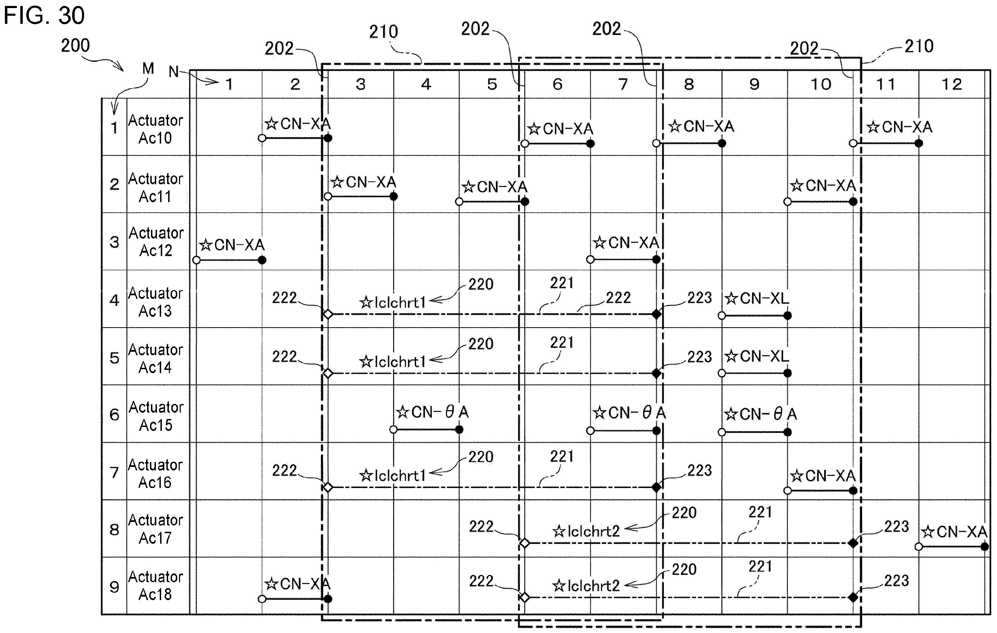

FIG. 30 is a YOGO chart 200 in a first modification including local chart identifiers 220. In the illustrated example, the chart includes an action line 221 being the dot-dash line for the actuator number M of 4 in the subperiods with the subperiod numbers N of 3 to 7. Above the action line 221, a local chart identifier 220 (lclchrt1) following a white star is written. The action line 221 has a start point 222 corresponding to the start position indicated by a white square, and has an end point 223 corresponding to the end position indicated by a black square. The chart also includes action lines 221 being the dot-dash lines in the horizontal fields (rows) for the actuator numbers M of 5 and 7 in the subperiods with the subperiod numbers N of 3 to 7. Above the action lines 221, the local chart identifiers 220 (lclchrt1) are written. These representations show that the actions of the actuators Ac13, Ac14, and Ac16 with the respective actuator numbers M of 4, 5, and 7 in the subperiods with the subperiod numbers N of 3 to 7 are described in the local chart 200L identified by the local chart identifiers 220. The area of the subperiod numbers N of 3 to 7 is the parallel processing portion 210. In this parallel processing portion 210, the actuators Ac13, Ac14, and Ac16 with the actuator numbers M of 4, 5, and 7 each correspond to a selected actuator in one or more aspects of the present invention.

The YOGO chart 200 illustrated in FIG. 30 also includes local chart identifiers 220 (lclchrt2) above the action lines 221 (two-dot-dash lines) for the actuator numbers M of 8 and 9 in the subperiods with the subperiod numbers N of 6 to 10. These representations show that the actions of the actuators Ac17 and Ac18 with the respective actuator numbers M of 8 and 9 in the subperiods with the subperiod numbers N of 6 to 10 are described in the local chart 200L identified by the local chart identifiers 220. The area of the subperiod numbers N of 6 to 10 is also the parallel processing portion 210. In this parallel processing portion 210, the actuators Ac17 and Ac18 with the actuator numbers M of 8 and 9 each correspond to a selected actuator in one or more aspects of the present invention.

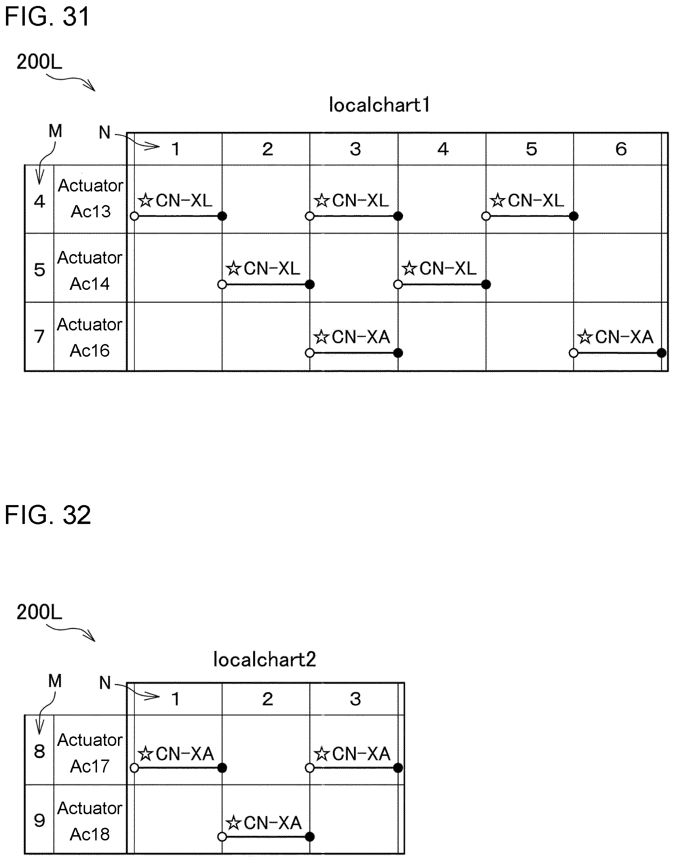

FIG. 31 is an example local chart 200L corresponding to the local chart identifiers 220 (lclchrt1). The illustrated local chart 200L describes the element actions of the actuators Ac13, Ac14, and Ac16 with the actuator numbers M of 4, 5, and 7 in the six subperiods with the subperiod numbers 1 to 6. The three actuators Ac13, Ac14, and Ac16 with their element actions described on the local chart 200L correspond to the three actuators Ac13, Ac14, and Ac16 marked with the local chart identifiers 220 (lclchrt1) on the YOGO chart 200 in FIG. 30. The parallel processing portion 210 with the local chart identifiers 220 (lclchrt1) on the YOGO chart 200 in FIG. 30 includes five subperiods with the subperiod numbers 3 to 7. While the five subperiods with the subperiod numbers 3 to 7 pass on the YOGO chart 200 shown in FIG. 30, the six subperiods pass on the local chart 200L shown in FIG. 31.

FIG. 32 is an example local chart 200L corresponding to the local chart identifiers 220 (lclchrt2). The illustrated local chart 200L describes the element actions of the two actuators Ac17 and Ac18 with the actuator numbers M of 8 and 9 in the three subperiods with the subperiod numbers 1 to 3. The two actuators Ac17 and Ac18 with their element actions described on the local chart 200L correspond to the two actuators Ac17 and Ac18 marked with the local chart identifiers 220 (lclchrt2) on the YOGO chart 200 in FIG. 30. The parallel processing portion 210 with the local chart identifiers 220 (lclchrt2) on the YOGO chart 200 in FIG. 30 includes five subperiods with the subperiod numbers 6 to 10. While the five subperiods with the subperiod numbers 6 to 10 pass on the YOGO chart 200 shown in FIG. 30, the three subperiods pass on the local chart 200L shown in FIG. 32.

As described above, the YOGO chart 200 may include the local chart identifiers 220 corresponding to the local charts 200L that are separate from the YOGO chart 200. This allows the YOGO chart 200 to be partially parallelized as in the above embodiment. This can shorten the overall operation time of the automated manufacturing machine similarly to the above embodiment.

With the method in the above first modification, the YOGO chart 200 simply includes the local chart identifiers 220 and is thus less complicated. This reduces errors when the engineer creates or understands the partially parallelized YOGO chart 200.

### H-2. Second Modification

In the above first modification, each parallel processing portion 210 is associated with a single local chart 200L. On the YOGO chart 200 illustrated in FIG. 30, for example, the parallel processing portion 210 for the subperiod numbers 3 to 7 is associated with the local chart 200L (localchart1), and the parallel processing portion 210 for the subperiod numbers 6 to 10 is associated with the local chart 200L (localchart2). However, each parallel processing portion 210 may be associated with multiple local charts 200L each including a different number of parallel subperiods 212.

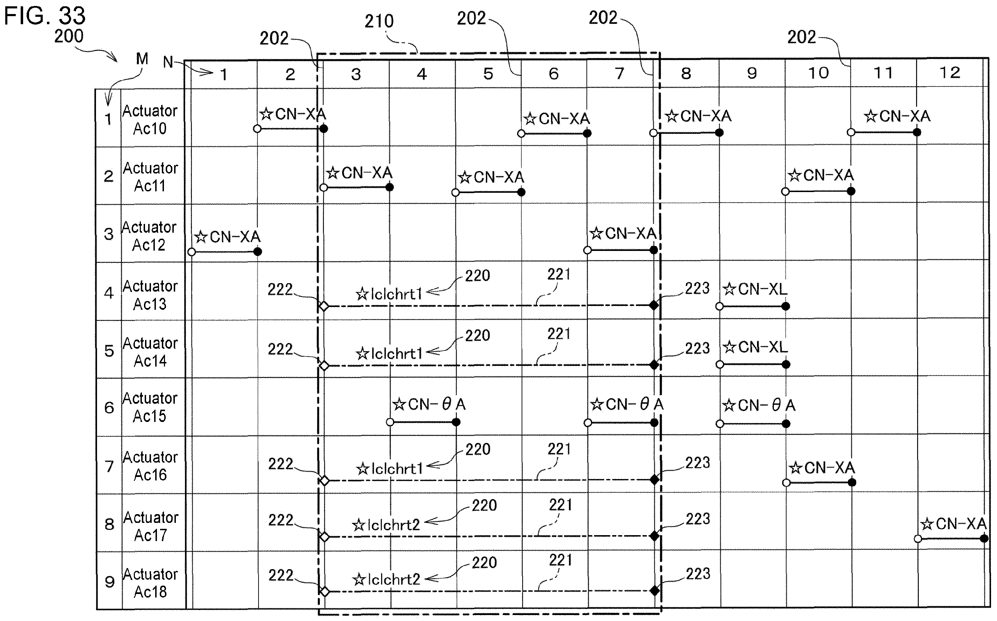

For example, the YOGO chart 200 illustrated in FIG. 33 includes the parallel processing portion 210 including the set of subperiods with the subperiod numbers 3 to 7. In this parallel processing portion 210, the local chart identifiers 220 (lclchrt1) are written for the three actuators with the actuator numbers M of 4, 5, and 7, and the local chart identifiers 220 (lclchrt2) are written for the two actuators with the actuator numbers M of 8 and 9. The local chart identifiers 220 (lclchrt1) indicate the local chart 200L (localchart1) describing actions in six subperiods (refer to FIG. 31). The local chart identifiers 220 (lclchrt2) indicate the local chart 200L (localchart2) describing actions in three subperiods (refer to FIG. 32).

In this manner, each parallel processing portion 210 is associated with the multiple local charts 200L each including a different number of parallel subperiods 212. The YOGO chart 200 can thus describe the actions of the actuators more flexibly. This can more effectively reduce a wait time that can occur when actuators having completed their actions cannot start the subsequent actions due to an incomplete action of another actuator.

The actions in the normal subperiods 211 in the parallel processing portion 210 (specifically, the actions of the actuators that are not written on the local charts 200L) may be written on a chart (hereafter, a global chart 200G) that is separate from the local charts 200L, instead of being directly written on the YOGO chart 200. This simplifies the YOGO chart 200.

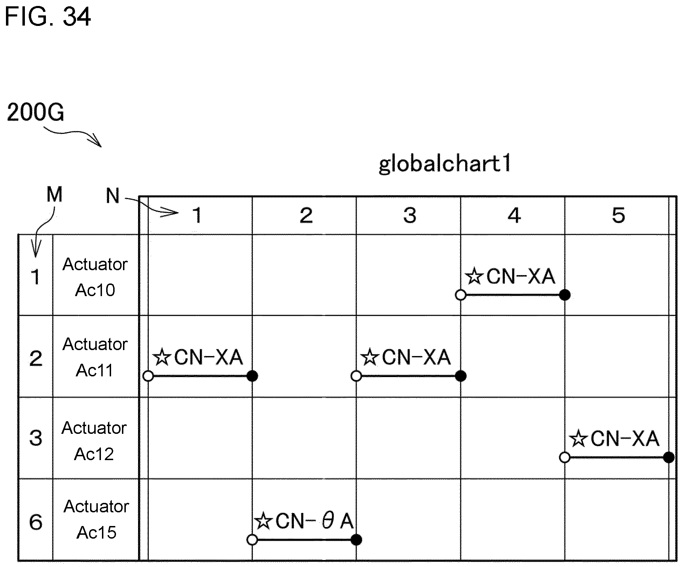

In the parallel processing portion 210 on the YOGO chart 200 illustrated in FIG. 33, for example, the actions of the three actuators Ac13, Ac14, and Ac16 with the actuator numbers M of 4, 5, and 7 are described on the local chart 200L in FIG. 31. The actions of the two actuators Ac17 and Ac18 with the actuator numbers M of 8 and 9 are described on the local chart 200L in FIG. 32. However, the actions of the other actuators (the four actuators Ac10 to Ac12 and Ac15 with the actuator numbers M of 1 to 3 and 6) are not described on the local charts 200L. The actions of these actuators are described on the global chart 200G as illustrated in FIG. 34. The YOGO chart 200 may include, in the parallel processing portion 210, global chart identifiers 230 corresponding to the global chart 200G to indicate that the actions of the above actuators (the four actuators Ac10 to Ac12 and Ac15 with the actuator numbers M of 1 to 3 and 6) are described on the global chart 200G.

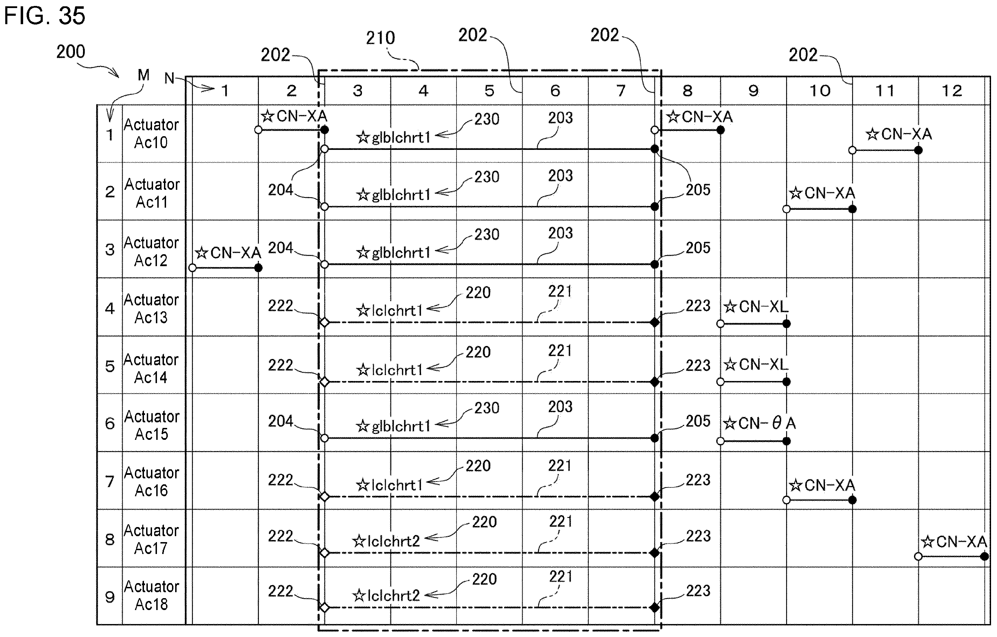

The YOGO chart 200 illustrated in FIG. 35 includes the global chart identifiers 230 (glblchrt1) at the positions for the actuator numbers M of 1 to 3 and 6 in the parallel processing portion 210. This indicates that the actions of the actuators Ac10 to Ac12 and Ac15 with the actuator numbers M of 1 to 3 and 6 are described on the global chart 200G (globalchart1). As shown in FIGs. 33 and 35, the YOGO chart 200 in FIG. 35 including the global chart identifiers 230 is simpler than the YOGO chart 200 in FIG. 33 including no global chart identifiers 230.

Although the YOGO chart 200 illustrated in FIG. 35 shows the parallel processing portion 210 including five subperiods (with the subperiod numbers 3 to 7), each of these subperiods simply shows either the local chart identifier 220 or the global chart identifier 230. Further, the information about the five subperiods included in the parallel processing portion 210 is obtainable based on the number of subperiods included in the global chart 200G and may be eliminated from the YOGO chart 200.

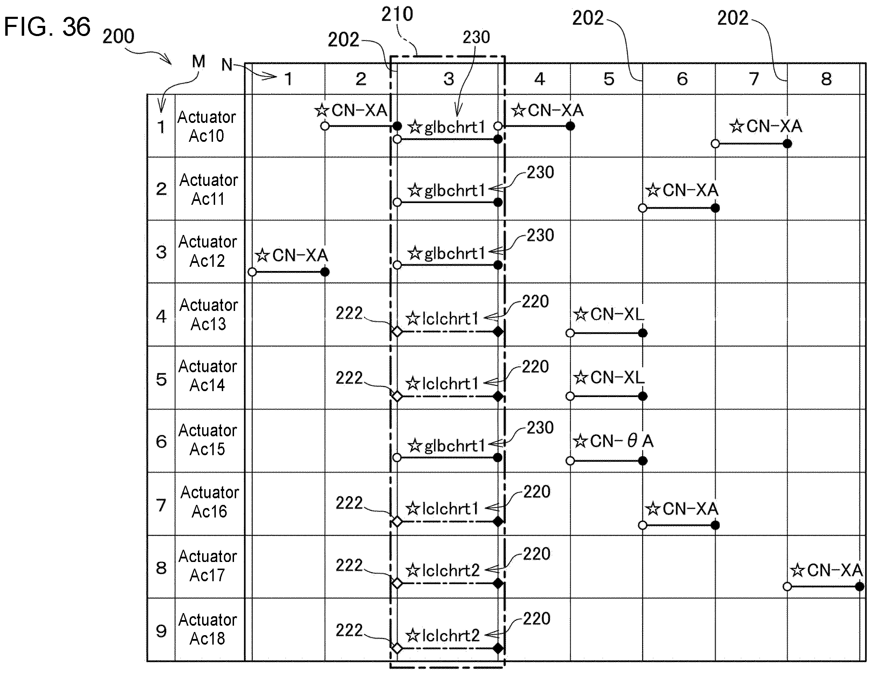

The YOGO chart 200 may be simplified as shown in FIG. 36 by merging the five subperiods (with the subperiod numbers 3 to 7) in the parallel processing portion 210 into the earliest subperiod (with the subperiod number 3), which shows the local chart identifier 220 or the global chart identifier 230. This further simplifies the YOGO chart 200.

For example, in the above embodiment and the modifications, each local chart 200L includes no parallel processing portion 210. However, each local chart 200L may include the parallel processing portion 210, with which another local chart 200L may be further associated.

### REFERENCE SIGNS LIST

10 pipe bender
11 rail
12 conveyor unit
12a holder shaft
12b chuck
13 machining unit
50 computer
100 control apparatus
100m monitor screen
100s operation button
101 chart creator
102 chart storage
110 control program generation apparatus
111 chart reader
112 element action storage
113 intermediate data generator
114 intermediate data converter
120 operation control apparatus
200 YOGO chart
200G global chart
200L local chart
200M main chart
201 separation line
202 trigger line
203 action line
204 start point
205 end point
206 element action
206a action identifier
206b parameter identifier
207, 208 data record
210 parallel processing portion
211 normal subperiod
212 parallel subperiod
220 local chart identifier
221 action line
222 start point
223 end point
230 global chart identifier
300, 300L, 300M intermediate data
400 control program
400L local program
400M main program
401, 402 data record
Ac10 to Ac18 actuator
DA10 to DA18 driver amplifier

## Claims

1. A control program generation apparatus (110) for generating a control program (400) for an automated manufacturing machine (10) including a plurality of actuators, the apparatus (110) comprising:
an element action storage (112) adapted to store a plurality of element actions in a manner associated with a plurality of program elements to perform the plurality of element actions, each of the plurality of element actions indicating an action of a corresponding actuator of the plurality of actuators in a direction of a degree of freedom of the corresponding actuator by a specified displacement;
an action chart reader (111) configured to read an action chart (200) describing an operation of the automated manufacturing machine (10), the action chart (200) including a plurality of subperiods into which an operation period from a start to an end of the operation of the automated manufacturing machine (10) is divided, the action chart (200) including the plurality of element actions included in the operation of the automated manufacturing machine (10), each of the plurality of element actions being assigned to a corresponding subperiod of the plurality of subperiods; and
a control program generator (113, 114) configured to generate the control program (400) to cause the automated manufacturing machine (10) to operate by combining together, in an order of the plurality of subperiods on the action chart (200), the plurality of program elements for the plurality of element actions assigned to the plurality of subperiods on the action chart (200),
**characterised in that**
the action chart (200) to be read by the action chart reader (111) includes a parallel processing portion (210) including a set of two or more consecutive subperiods of the plurality of subperiods,
the parallel processing portion (210) includes a plurality of parallel subperiods (212) into which the parallel processing portion (210) is divided, and the plurality of parallel subperiods (212) are parallel to the two or more consecutive subperiods,
each of the plurality of parallel subperiods (212) in the parallel processing portion (210) is assigned with an element action of the plurality of element actions corresponding to a selected actuator of the plurality of actuators,
each of the two or more consecutive subperiods in the parallel processing portion (210) is assigned with an element action of the plurality of element actions corresponding to an actuator of the plurality of actuators other than the selected actuator, and
the control program generator (113, 114) is adapted to generate the control program (400) by combining together, in an order of the plurality of parallel subperiods (212), program elements of the plurality of program elements for element actions of the plurality of element actions assigned to the plurality of parallel subperiods (212) in the parallel processing portion (210), and combining together, in an order of the two or more consecutive subperiods, program elements of the plurality of program elements for element actions of the plurality of element actions assigned to the two or more consecutive subperiods in the parallel processing portion (210).

2. The control program generation apparatus according to claim 1, wherein
the action chart reader (111) is adapted to read a local chart (200L), the local chart (200L) includes the plurality of parallel subperiods (212) in the parallel processing portion (210) on the action chart (200) and is separate from the action chart (200), and the local chart (200L) includes the element action of the selected actuator being at least one selected actuator assigned to each of the plurality of parallel subperiods (212) in the parallel processing portion (210), and
the action chart (200) to be read by the action chart reader (111) includes a local chart identifier (220) specific to the local chart, and the local chart identifier (220) is assigned to the parallel processing portion (210) on the action chart (200).

3. A control program generation method for generating, with a computer, a control program (400) for an automated manufacturing machine (10) including a plurality of actuators, the method comprising:
reading (STEP 1) an action chart (200) describing an operation of the automated manufacturing machine (10), the action chart (200) including a plurality of subperiods into which an operation period from a start to an end of the operation of the automated manufacturing machine (10) is divided, the action chart (200) including a plurality of element actions included in the operation of the automated manufacturing machine (10), each of the plurality of element actions indicating an action of a corresponding actuator of the plurality of actuators in a direction of a degree of freedom of the corresponding actuator by a specified displacement, each of the plurality of element actions being assigned to a corresponding subperiod of the plurality of subperiods; and
generating (STEP 4 to STEP 6) the control program (400) to cause the automated manufacturing machine (10) to operate by referring to a stored correspondence between the plurality of element actions on the action chart (200) and a plurality of program elements to perform the plurality of element actions, by converting the plurality of element actions on the action chart (200) to the plurality of program elements, and by combining together the plurality of program elements in an order of the plurality of subperiods,
**characterised in that**
the action chart (200) to be read includes a parallel processing portion (210) including a set of two or more consecutive subperiods of the plurality of subperiods,
the parallel processing portion (210) includes a plurality of parallel subperiods (212) into which the parallel processing portion (210) is divided, and the plurality of parallel subperiods (212) are parallel to the two or more consecutive subperiods,
each of the plurality of parallel subperiods (212) in the parallel processing portion (210) is assigned with an element action of the plurality of element actions corresponding to a selected actuator of the plurality of actuators,
each of the two or more consecutive subperiods in the parallel processing portion (210) is assigned with an element action of the plurality of element actions corresponding to an actuator of the plurality of actuators other than the selected actuator, and
the generating the control program (400) includes generating the control program (400) by combining together, in an order of the plurality of parallel subperiods (212), program elements of the plurality of program elements for element actions of the plurality of element actions assigned to the plurality of parallel subperiods (212) in the parallel processing portion (210), and combining together, in an order of the two or more consecutive subperiods, program elements of the plurality of program elements for element actions of the plurality of element actions assigned to the two or more consecutive subperiods in the parallel processing portion (210).

4. A program for causing a computer to implement a method for generating a control program (400) for an automated manufacturing machine (10) including a plurality of actuators, the method comprising:
reading (STEP 1) an action chart (200) describing an operation of the automated manufacturing machine (10), the action chart (200) including a plurality of subperiods into which an operation period from a start to an end of the operation of the automated manufacturing machine (10) is divided, the action chart (200) including a plurality of element actions included in the operation of the automated manufacturing machine (10), each of the plurality of element actions indicating an action of a corresponding actuator of the plurality of actuators in a direction of a degree of freedom of the corresponding actuator by a specified displacement, each of the plurality of element actions being assigned to a corresponding subperiod of the plurality of subperiods; and
generating (STEP 4 to STEP 6) the control program (400) to cause the automated manufacturing machine (10) to operate by referring to a stored correspondence between the plurality of element actions on the action chart (200) and a plurality of program elements to perform the plurality of element actions, by converting the plurality of element actions on the action chart (200) to the plurality of program elements, and by combining together the plurality of program elements in an order of the plurality of subperiods,
**characterised in that**
the action chart (200) to be read includes a parallel processing portion (210) including a set of two or more consecutive subperiods of the plurality of subperiods,
the parallel processing portion (210) includes a plurality of parallel subperiods (212) into which the parallel processing portion (210) is divided, and the plurality of parallel subperiods (212) are parallel to the two or more consecutive subperiods,
each of the plurality of parallel subperiods (212) in the parallel processing portion (210) is assigned with an element action of the plurality of element actions corresponding to a selected actuator of the plurality of actuators,
each of the two or more consecutive subperiods in the parallel processing portion (210) is assigned with an element action of the plurality of element actions corresponding to an actuator of the plurality of actuators other than the selected actuator, and
the generating the control program (400) includes generating the control program (400) by combining together, in an order of the plurality of parallel subperiods (212), program elements of the plurality of program elements for element actions of the plurality of element actions assigned to the plurality of parallel subperiods (212) in the parallel processing portion (210), and combining together, in an order of the two or more consecutive subperiods, program elements of the plurality of program elements for element actions of the plurality of element actions assigned to the two or more consecutive subperiods in the parallel processing portion.

## Patentansprüche

1. Steuerprogrammerzeugungsvorrichtung (110) zum Erzeugen eines Steuerprogramms (400) für eine automatisierte Fertigungsmaschine (10) einschließlich einer Vielzahl von Aktoren, wobei die Vorrichtung (110) umfasst:
einen Elementaktionsspeicher (112), der dazu ausgelegt ist, eine Vielzahl von Elementaktionen in einer Weise zu speichern, die mit einer Vielzahl von Programmelementen assoziiert ist, um die Vielzahl von Elementaktionen durchzuführen, wobei jede der Vielzahl von Elementaktionen eine Aktion eines entsprechenden Aktors der Vielzahl von Aktoren in einer Richtung eines Freiheitsgrads des entsprechenden Aktors durch eine vorgegebene Verschiebung angibt;
einen Aktionsdiagrammleser (111), der dazu konfiguriert ist, ein Aktionsdiagramm (200) zu lesen, das einen Vorgang der automatisierten Fertigungsmaschine (10) beschreibt, wobei das Aktionsdiagramm (200) eine Vielzahl von Teilzeiträumen beinhaltet, in die ein Betriebszeitraum von einem Anfang bis zu einem Ende des Vorgangs der automatisierten Fertigungsmaschine (10) unterteilt ist, wobei das Aktionsdiagramm (200) die Vielzahl von Elementaktionen beinhaltet, die in dem Vorgang der automatisierten Fertigungsmaschine (10) beinhaltet sind, wobei jede der Vielzahl von Elementaktionen einem entsprechenden Teilzeitraum der Vielzahl von Teilzeiträumen zugewiesen ist; und
einen Steuerprogrammgenerator (113, 114), der dazu konfiguriert ist, das Steuerprogramm (400) zu erzeugen, um zu bewirken, dass die automatisierte Fertigungsmaschine (10) arbeitet, indem, in einer Reihenfolge der Vielzahl von Teilzeiträumen auf dem Aktionsdiagramm (200), die Vielzahl von Programmelementen für die Vielzahl von Elementaktionen, die der Vielzahl von Teilzeiträumen auf dem Aktionsdiagramm (200) zugewiesen sind, miteinander kombiniert werden,
**dadurch gekennzeichnet, dass**
das Aktionsdiagramm (200), das von dem Aktionsdiagrammleser (111) zu lesen ist, einen Parallelverarbeitungsabschnitt (210) einschließlich eines Satzes von zwei oder mehr aufeinanderfolgenden Teilzeiträumen der Vielzahl von Teilzeiträumen beinhaltet,
der Parallelverarbeitungsabschnitt (210) eine Vielzahl von parallelen Teilzeiträumen (212) beinhaltet, in die der Parallelverarbeitungsabschnitt (210) unterteilt ist, und die Vielzahl von parallelen Teilzeiträumen (212) parallel zu den zwei oder mehr aufeinanderfolgenden Teilzeiträumen sind,
jedem der Vielzahl von parallelen Teilzeiträumen (212) in dem Parallelverarbeitungsabschnitt (210) eine Elementaktion der Vielzahl von Elementaktionen zugewiesen ist, die einem ausgewählten Aktor der Vielzahl von Aktoren entspricht,
jedem der zwei oder mehr aufeinanderfolgenden Teilzeiträume in dem Parallelverarbeitungsabschnitt (210) eine Elementaktion der Vielzahl von Elementaktionen zugewiesen ist, die einem Aktor der Vielzahl von Aktoren, der nicht der ausgewählte Aktor ist, entspricht, und
der Steuerprogrammgenerator (113, 114) dazu ausgelegt ist, das Steuerprogramm (400) zu erzeugen, indem, in einer Reihenfolge der Vielzahl von parallelen Teilzeiträumen (212), Programmelemente der Vielzahl von Programmelementen für Elementaktionen der Vielzahl von Elementaktionen, die der Vielzahl von parallelen Teilzeiträumen (212) in dem Parallelverarbeitungsabschnitt (210) zugewiesen sind, miteinander kombiniert werden, und Kombinieren miteinander, in einer Reihenfolge der zwei oder mehr aufeinanderfolgenden Teilzeiträume, von Programmelementen der Vielzahl von Programmelementen für Elementaktionen der Vielzahl von Elementaktionen, die den zwei oder mehr aufeinanderfolgenden Teilzeiträumen in dem Parallelverarbeitungsabschnitt (210) zugewiesen sind.

2. Steuerprogrammerzeugungsvorrichtung nach Anspruch 1, wobei
der Aktionsdiagrammleser (111) dazu ausgelegt ist, ein lokales Diagramm (200L) zu lesen, das lokale Diagramm (200L) die Vielzahl von parallelen Teilzeiträumen (212) in dem Parallelverarbeitungsabschnitt (210) auf dem Aktionsdiagramm (200) beinhaltet und separat von dem Aktionsdiagramm (200) ist und das lokale Diagramm (200L) beinhaltet, dass die Elementaktion des ausgewählten Aktors mindestens ein ausgewählter Aktor ist, der jeder der Vielzahl von parallelen Teilzeiträumen (212) in dem Parallelverarbeitungsabschnitt (210) zugewiesen ist, und
das Aktionsdiagramm (200), das von dem Aktionsdiagrammleser (111) zu lesen ist, eine lokale Diagrammkennung (220) beinhaltet, die für das lokale Diagramm spezifisch ist, und die lokale Diagrammkennung (220) dem Parallelverarbeitungsabschnitt (210) auf dem Aktionsdiagramm (200) zugewiesen ist.

3. Steuerprogrammerzeugungsverfahren zum Erzeugen, mit einem Computer, eines Steuerprogramms (400) für eine automatisierte Fertigungsmaschine (10) einschließlich einer Vielzahl von Aktoren, wobei das Verfahren umfasst:
Lesen (SCHRITT 1) eines Aktionsdiagramms (200), das einen Vorgang der automatisierten Fertigungsmaschine (10) beschreibt, wobei das Aktionsdiagramm (200) eine Vielzahl von Teilzeiträumen beinhaltet, in die ein Betriebszeitraum von einem Anfang bis zu einem Ende des Vorgangs der automatisierten Fertigungsmaschine (10) unterteilt ist, wobei das Aktionsdiagramm (200) eine Vielzahl von Elementaktionen beinhaltet, die in dem Vorgang der automatisierten Fertigungsmaschine (10) beinhaltet sind, wobei jede der Vielzahl von Elementaktionen eine Aktion eines entsprechenden Aktors der Vielzahl von Aktoren in einer Richtung eines Freiheitsgrads des entsprechenden Aktors durch eine vorgegebene Verschiebung angibt, wobei jede der Vielzahl von Elementaktionen einem entsprechenden Teilzeitraum der Vielzahl von Teilzeiträumen zugewiesen ist; und
Erzeugen (SCHRITT 4 bis SCHRITT 6) des Steuerprogramms (400), um zu bewirken, dass die automatisierte Fertigungsmaschine (10) arbeitet, indem auf eine gespeicherte Entsprechung zwischen der Vielzahl von Elementaktionen auf dem Aktionsdiagramm (200) und einer Vielzahl von Programmelementen Bezug genommen wird, um die Vielzahl von Elementaktionen durchzuführen, indem die Vielzahl von Elementaktionen auf dem Aktionsdiagramm (200) in die Vielzahl von Programmelementen umgewandelt werden, und indem die Vielzahl von Programmelementen in einer Reihenfolge der Vielzahl von Teilzeiträumen miteinander kombiniert werden,
**dadurch gekennzeichnet, dass**
das zu lesende Aktionsdiagramm (200) einen Parallelverarbeitungsabschnitt (210) einschließlich eines Satzes von zwei oder mehr aufeinanderfolgenden Teilzeiträumen der Vielzahl von Teilzeiträumen beinhaltet,
der Parallelverarbeitungsabschnitt (210) eine Vielzahl von parallelen Teilzeiträumen (212) beinhaltet, in die der Parallelverarbeitungsabschnitt (210) unterteilt ist, und die Vielzahl von parallelen Teilzeiträumen (212) parallel zu den zwei oder mehr aufeinanderfolgenden Teilzeiträumen sind,
jedem der Vielzahl von parallelen Teilzeiträumen (212) in dem Parallelverarbeitungsabschnitt (210) eine Elementaktion der Vielzahl von Elementaktionen zugewiesen ist, die einem ausgewählten Aktor der Vielzahl von Aktoren entspricht,
jedem der zwei oder mehr aufeinanderfolgenden Teilzeiträume in dem Parallelverarbeitungsabschnitt (210) eine Elementaktion der Vielzahl von Elementaktionen zugewiesen ist, die einem Aktor der Vielzahl von Aktoren, der nicht der ausgewählte Aktor ist, entspricht, und
das Erzeugen des Steuerprogramms (400) das Erzeugen des Steuerprogramms (400) beinhaltet, indem, in einer Reihenfolge der Vielzahl von parallelen Teilzeiträumen (212), Programmelemente der Vielzahl von Programmelementen für Elementaktionen der Vielzahl von Elementaktionen, die der Vielzahl von parallelen Teilzeiträumen (212) in dem Parallelverarbeitungsabschnitt (210) zugewiesen sind, miteinander kombiniert werden, und Kombinieren miteinander, in einer Reihenfolge der zwei oder mehr aufeinanderfolgenden Teilzeiträume, von Programmelementen der Vielzahl von Programmelementen für Elementaktionen der Vielzahl von Elementaktionen, die den zwei oder mehr aufeinanderfolgenden Teilzeiträumen in dem Parallelverarbeitungsabschnitt (210) zugewiesen sind.

4. Programm zum Veranlassen eines Computers, ein Verfahren zum Erzeugen eines Steuerprogramms (400) für eine automatisierte Fertigungsmaschine (10) einschließlich einer Vielzahl von Aktoren zu implementieren, wobei das Verfahren umfasst:
Lesen (SCHRITT 1) eines Aktionsdiagramms (200), das einen Vorgang der automatisierten Fertigungsmaschine (10) beschreibt, wobei das Aktionsdiagramm (200) eine Vielzahl von Teilzeiträumen beinhaltet, in die ein Betriebszeitraum von einem Anfang bis zu einem Ende des Vorgangs der automatisierten Fertigungsmaschine (10) unterteilt ist, wobei das Aktionsdiagramm (200) eine Vielzahl von Elementaktionen beinhaltet, die in dem Vorgang der automatisierten Fertigungsmaschine (10) beinhaltet sind, wobei jede der Vielzahl von Elementaktionen eine Aktion eines entsprechenden Aktors der Vielzahl von Aktoren in einer Richtung eines Freiheitsgrads des entsprechenden Aktors durch eine vorgegebene Verschiebung angibt, wobei jede der Vielzahl von Elementaktionen einem entsprechenden Teilzeitraum der Vielzahl von Teilzeiträumen zugewiesen ist; und
Erzeugen (SCHRITT 4 bis SCHRITT 6) des Steuerprogramms (400), um zu bewirken, dass die automatisierte Fertigungsmaschine (10) arbeitet, indem auf eine gespeicherte Entsprechung zwischen der Vielzahl von Elementaktionen auf dem Aktionsdiagramm (200) und einer Vielzahl von Programmelementen Bezug genommen wird, um die Vielzahl von Elementaktionen durchzuführen, indem die Vielzahl von Elementaktionen auf dem Aktionsdiagramm (200) in die Vielzahl von Programmelementen umgewandelt werden und indem die Vielzahl von Programmelementen in einer Reihenfolge der Vielzahl von Teilzeiträumen miteinander kombiniert werden,
**dadurch gekennzeichnet, dass**
das zu lesende Aktionsdiagramm (200) einen Parallelverarbeitungsabschnitt (210) einschließlich eines Satzes von zwei oder mehr aufeinanderfolgenden Teilzeiträumen der Vielzahl von Teilzeiträumen beinhaltet,
der Parallelverarbeitungsabschnitt (210) eine Vielzahl von parallelen Teilzeiträumen (212) beinhaltet, in die der Parallelverarbeitungsabschnitt (210) unterteilt ist, und die Vielzahl von parallelen Teilzeiträumen (212) parallel zu den zwei oder mehr aufeinanderfolgenden Teilzeiträumen sind,
jedem der Vielzahl von parallelen Teilzeiträumen (212) in dem Parallelverarbeitungsabschnitt (210) eine Elementaktion der Vielzahl von Elementaktionen zugewiesen ist, die einem ausgewählten Aktor der Vielzahl von Aktoren entspricht,
jedem der zwei oder mehr aufeinanderfolgenden Teilzeiträume in dem Parallelverarbeitungsabschnitt (210) eine Elementaktion der Vielzahl von Elementaktionen zugewiesen ist, die einem Aktor der Vielzahl von Aktoren, der nicht der ausgewählte Aktor ist, entspricht, und
das Erzeugen des Steuerprogramms (400) das Erzeugen des Steuerprogramms (400) durch Kombinieren miteinander, in einer Reihenfolge der Vielzahl von parallelen Teilzeiträumen (212), von Programmelementen der Vielzahl von Programmelementen für Elementaktionen der Vielzahl von Elementaktionen beinhaltet, die der Vielzahl von parallelen Teilzeiträumen (212) in dem Parallelverarbeitungsabschnitt (210) zugewiesen sind, und Kombinieren miteinander, in einer Reihenfolge der zwei oder mehr aufeinanderfolgenden Teilzeiträume, von Programmelementen der Vielzahl von Programmelementen für Elementaktionen der Vielzahl von Elementaktionen, die den zwei oder mehr aufeinanderfolgenden Teilzeiträumen in dem Parallelverarbeitungsabschnitt zugewiesen sind.

## Revendications

1. Appareil de génération de programme de commande (110) destiné à générer un programme de commande (400) pour une machine de fabrication automatisée (10) comprenant une pluralité d'actionneurs, l'appareil (110) comprenant :
un dispositif de stockage d'action d'élément (112) adapté au stockage
d'une pluralité d'actions d'élément de manière associée
à une pluralité d'éléments de programme pour réaliser la pluralité d'actions d'élément, chacune de la pluralité d'actions d'élément indiquant une action d'un actionneur correspondant de la pluralité d'actionneurs dans une direction d'un degré de liberté de l'actionneur correspondant d'un déplacement spécifié ;
un lecteur de diagramme d'action (111) configuré pour lire un diagramme d'action (200) décrivant une opération de la machine de fabrication automatisée (10), le diagramme d'action (200) comprenant une pluralité de sous-périodes en lesquelles une période de fonctionnement allant du début à la fin de l'opération de la machine de fabrication automatisée (10) est divisée, le diagramme d'action (200) comprenant la pluralité d'actions d'élément comprises dans le fonctionnement de la machine de fabrication automatisée (10), chacune de la pluralité d'actions d'élément étant attribuée à une sous-période correspondante de la pluralité de sous-périodes ; et
un générateur de programme de commande (113, 114) configuré pour générer le programme de commande (400) pour amener la machine de fabrication automatisée (10) à fonctionner en combinant ensemble, dans un ordre de la pluralité de sous-périodes sur le diagramme d'action (200), la pluralité d'éléments de programme pour la pluralité d'actions d'élément attribuées à la pluralité de sous-périodes sur le diagramme d'action (200),
**caractérisé en ce que**
le diagramme d'action (200) devant être lu par le lecteur de diagramme d'action (111) comprend une partie de traitement parallèle (210) comprenant un ensemble de deux sous-périodes consécutives ou plus de la pluralité de sous-périodes,
la partie de traitement parallèle (210) comprend une pluralité de sous-périodes parallèles (212) en lesquelles la partie de traitement parallèle (210) est divisée, et la pluralité de sous-périodes parallèles (212) sont parallèles aux deux sous-périodes consécutives ou plus,
chacune de la pluralité de sous-périodes parallèles (212) dans la partie de traitement parallèle (210) est attribuée à une action d'élément de la pluralité d'actions d'élément correspondant à un actionneur sélectionné de la pluralité d'actionneurs,
chacune des deux sous-périodes consécutives ou plus dans la partie de traitement parallèle (210) est attribuée à une action d'élément de la pluralité d'actions d'élément correspondant à un actionneur de la pluralité d'actionneurs autre que l'actionneur sélectionné, et
le générateur de programme de commande (113, 114) est adapté pour générer le programme de commande (400) en combinant
ensemble, dans un ordre de la pluralité de sous-périodes parallèles (212), des éléments de programme de la pluralité d'éléments de programme pour des actions d'élément de la pluralité d'actions d'élément attribuées à la pluralité de sous-périodes parallèles (212) dans la partie de traitement parallèle (210), et en combinant ensemble, dans un ordre des deux sous-périodes consécutives ou plus, des éléments de programme de la pluralité d'éléments de programme pour des actions d'élément de la pluralité d'actions d'élément attribuées aux deux sous-périodes consécutives ou plus dans la partie de traitement parallèle (210).

2. Appareil de génération de programme de commande selon la revendication 1,
ledit lecteur de diagramme d'action (111) étant adapté pour lire un diagramme local (200L), ledit diagramme local (200L) comprenant
la pluralité de sous-périodes parallèles (212) dans la partie de traitement parallèle (210) sur le diagramme d'action (200) et étant distinct du diagramme d'action (200), et ledit diagramme local (200L) comprenant l'action d'élément de l'actionneur sélectionné qui est au moins un actionneur sélectionné attribué à chacune de la pluralité de sous-périodes parallèles (212) dans la partie de traitement parallèle (210), et
ledit diagramme d'action (200) devant être lu par le lecteur de diagramme d'action (111) comprenant un identifiant (220) de diagramme local spécifique au diagramme local, et ledit identifiant (220) de diagramme local étant attribué à la partie de traitement parallèle (210) sur le diagramme d'action (200).

3. Procédé de génération de programme de commande permettant de générer, avec un ordinateur, un programme de commande (400) pour une machine de fabrication automatisée (10) comprenant une pluralité d'actionneurs, le procédé comprenant :
la lecture (ÉTAPE 1) d'un diagramme d'action (200) décrivant une opération de la machine de fabrication automatisée (10), le diagramme d'action (200) comprenant une pluralité de sous-périodes en lesquelles une période de fonctionnement allant du début à la fin de l'opération de la machine de fabrication automatisée (10) est divisée, le diagramme d'action (200) comprenant une pluralité d'actions d'élément comprises dans le fonctionnement de la machine de fabrication automatisée (10), chacune de la pluralité d'actions d'élément indiquant une action d'un actionneur correspondant de la pluralité d'actionneurs dans une direction d'un degré de liberté de l'actionneur correspondant d'un déplacement spécifié, chacune de la pluralité d'actions d'élément étant attribuée à une sous-période correspondante de la pluralité de sous-périodes ; et
la génération (ÉTAPE 4 à ÉTAPE 6) du programme de commande (400) pour amener la machine de fabrication automatisée (10) à fonctionner en se référant à une correspondance stockée entre la pluralité d'actions d'élément sur le diagramme d'action (200) et une pluralité d'éléments de programme pour réaliser la pluralité d'actions d'élément, en convertissant la pluralité d'actions d'élément sur le diagramme d'action (200) en la pluralité d'éléments de programme, et en combinant ensemble la pluralité d'éléments de programme dans un ordre de la pluralité de sous-périodes,
**caractérisé en ce que**
le diagramme d'action (200) devant être lu comprend une partie de traitement parallèle (210) comprenant un ensemble de deux sous-périodes consécutives ou plus de la pluralité de sous-périodes,
la partie de traitement parallèle (210) comprend une pluralité de sous-périodes parallèles (212) en lesquelles la partie de traitement parallèle (210) est divisée, et la pluralité de sous-périodes parallèles (212) sont parallèles aux deux sous-périodes consécutives ou plus,
chacune de la pluralité de sous-périodes parallèles (212) dans la partie de traitement parallèle (210) est attribuée à une action d'élément de la pluralité d'actions d'élément correspondant à un actionneur sélectionné de la pluralité d'actionneurs,
chacune des deux sous-périodes consécutives ou plus dans la partie de traitement parallèle (210) est attribuée à une action d'élément de la pluralité d'actions d'élément correspondant à un actionneur de la pluralité d'actionneurs autre que l'actionneur sélectionné, et
la génération du programme de commande (400) comprend la génération du programme de commande (400) en combinant ensemble, dans un ordre de la pluralité de sous-périodes parallèles (212), des éléments de programme de la pluralité d'éléments de programme pour des actions d'élément de la pluralité d'actions d'élément attribuées à la pluralité de sous-périodes parallèles (212) dans la partie de traitement parallèle (210), et en combinant ensemble, dans un ordre des deux sous-périodes consécutives ou plus, des éléments de programme de la pluralité d'éléments de programme pour des actions d'élément de la pluralité d'actions d'élément attribuées aux deux sous-périodes consécutives ou plus dans la partie de traitement parallèle (210).

4. Programme pour amener un ordinateur à mettre en œuvre un procédé destiné à générer un programme de commande (400) pour une machine de fabrication automatisée (10) comprenant une pluralité d'actionneurs, le procédé comprenant :
la lecture (ÉTAPE 1) d'un diagramme d'action (200) décrivant une opération de la machine de fabrication automatisée (10), le diagramme d'action (200) comprenant une pluralité de sous-périodes en lesquelles une période de fonctionnement allant du début à la fin de l'opération de la machine de fabrication automatisée (10) est divisée, le diagramme d'action (200) comprenant une pluralité d'actions d'élément comprises dans le fonctionnement de la machine de fabrication automatisée (10), chacune de la pluralité d'actions d'élément indiquant une action d'un actionneur correspondant de la pluralité d'actionneurs dans une direction d'un degré de liberté de l'actionneur correspondant d'un déplacement spécifié, chacune de la pluralité d'actions d'élément étant attribuée à une sous-période correspondante de la pluralité de sous-périodes ; et
la génération (ÉTAPE 4 à ÉTAPE 6) du programme de commande (400) pour amener la machine de fabrication automatisée (10) à fonctionner en se référant à une correspondance stockée entre la pluralité d'actions d'élément sur le diagramme d'action (200) et une pluralité d'éléments de programme pour réaliser la pluralité d'actions d'élément, en convertissant la pluralité d'actions d'élément sur le diagramme d'action (200) en la pluralité d'éléments de programme, et en combinant ensemble la pluralité d'éléments de programme dans un ordre de la pluralité de sous-périodes,
**caractérisé en ce que**
le diagramme d'action (200) devant être lu comprend une partie de traitement parallèle (210) comprenant un ensemble de deux sous-périodes consécutives ou plus de la pluralité de sous-périodes,
la partie de traitement parallèle (210) comprend une pluralité de sous-périodes parallèles (212) en lesquelles la partie de traitement parallèle (210) est divisée, et la pluralité de sous-périodes parallèles (212) sont parallèles aux deux sous-périodes consécutives ou plus,
chacune de la pluralité de sous-périodes parallèles (212) dans la partie de traitement parallèle (210) est attribuée à une action d'élément de la pluralité d'actions d'élément correspondant à un actionneur sélectionné de la pluralité d'actionneurs,
chacune des deux sous-périodes consécutives ou plus dans la partie de traitement parallèle (210) est attribuée à une action d'élément de la pluralité d'actions d'élément correspondant à un actionneur de la pluralité d'actionneurs autre que l'actionneur sélectionné, et
la génération du programme de commande (400) comprend la génération du programme de commande (400) en combinant ensemble, dans un ordre de la pluralité de sous-périodes parallèles (212), des éléments de programme de la pluralité d'éléments de programme pour des actions d'élément de la pluralité d'actions d'élément attribuées à la pluralité de sous-périodes parallèles (212) dans la partie de traitement parallèle (210), et en combinant ensemble, dans un ordre des deux sous-périodes consécutives ou plus, des éléments de programme de la pluralité d'éléments de programme pour des actions d'élément de la pluralité d'actions d'élément attribuées aux deux sous-périodes consécutives ou plus dans la partie de traitement parallèle.
